(19) **Europäisches Patentamt**
**European Patent Office**
**Office européen des brevets**

(11) **EP 2 282 617 A1**

(12) **EUROPEAN PATENT APPLICATION**
published in accordance with Art. 153(4) EPC

(43) Date of publication:
**09.02.2011 Bulletin 2011/06**

(21) Application number: **09754616.2**

(22) Date of filing: **21.05.2009**

(51) Int Cl.:
***H05B 41/24*** *(2006.01)*

(86) International application number:
**PCT/JP2009/059361**

(87) International publication number:
**WO 2009/145108 (03.12.2009 Gazette 2009/49)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **26.05.2008 JP 2008136641**

(71) Applicant: **Panasonic Electric Works Co., Ltd.**
**Kadoma-shi, Osaka 571-8686 (JP)**

(72) Inventor: **TANAKA, Toshifumi**
**Osaka 571-8686 (JP)**

(74) Representative: **Appelt, Christian W.**
**Forrester & Boehmert**
**Pettenkoferstrasse 20-22**
**80336 München (DE)**

(54) **DEVICE FOR OPERATING DISCHARGE LAMP, DEVICE FOR OPERATING VEHICLE-MOUNTED OPERATING HIGH-INTENSITY DISCHARGE LAMP, VEHICLE-MOUNTED HEADLIGHT, AND VEHICLE**

(57)  A discharge lamp lighting device is realized, which enables scale and cost reductions thereof, and is capable of reducing a flash at a starting time of the discharge lamp, suppressing a feeling of wrongness at a time of raising a luminous flux, and easily suppressing variations among a plurality of the discharge lamps. The discharge lamp lighting device includes: a lighting circuit unit (2) that receives a direct current voltage, and converts the direct current voltage into an output required by a discharge lamp (5); and a control unit (6) that receives detection values of a discharge lamp voltage and a discharge lamp current, and controls the lighting circuit unit (2) to achieve a predetermined target power value, in which, after the discharge lamp (5) is started, the control unit (6) controls the predetermined target power value to be reduced from an output power value larger than a rated power value to the rated power value for several seconds to several ten seconds, wherein the control unit (6) sets a target power value after the discharge lamp is started at a first output power value larger than the rated power value, and increases the target power value toward a second output power value as a maximum output power value for a first predetermined time after the discharge lamp is started.

FIG. 1

```
RESET
INITIALIZES INVERSION TIME AND NUMBER OF INVERSION TIMES    ~ S1
CONTROL AT THE TIME OF NO LOAD    ~ S2
LAMP IS LIGHTED ?    S3    NO
YES
READS LAMP VOLTAGE    ~ S4
AVERAGES OF LAMP VOLTAGE    ~ S5
READS OUT OUTPUT POWER TARGET VALUE    ~ S6
CALCULATES OUTPUT CURRENT TARGET VALUE    ~ S7
READS LAMP CURRENT    ~ S8
AVERAGES FOR LAMP CURRENT    ~ S9
COMPARES CALCULATION BETWEEN TARGET VALUE AND AVERAGE VALUE    ~ S10
CHANGES THE OUTPUT CONTROL SIGNAL    ~ S11
INVERSION CYCLE HAS ELAPSED ?    S12    YES    FULL BRIDGE INVERSION AT CONSTANT INTERVAL    S13
NO
CALCULATES POST-INVERSION TIME    ~ S14
PERFORMS OTHER CONTROLS    ~ S15
```

**Description**

TECHNICAL FIELD

The present invention relates to a discharge lamp lighting device for lighting a high-intensity discharge lamp such as a metal halide lamp, the discharge lamp lighting device performing power control for rapidly raising a luminous flux, and relates to a vehicle-mounted high-intensity discharge lamp lighting device, a vehicle-mounted headlight, and a vehicle.

BACKGROUND ART

A high-intensity discharge lamp such as a metal halide lamp is also used to be mounted on a vehicle because of high brightness thereof. When the high-intensity discharge lamp is used to be mounted on the vehicle, it is necessary to rapidly raise a luminous flux of the high-intensity discharge lamp at a starting time thereof, in particular, in order to ensure visibility early. Japanese Patent No. 2946384 (Patent Literature 1) and Japanese Patent Laid-Open Publication No. 2000-235899 (Patent Literature 2) disclose a technology for accelerating the rise of the luminous flux of the high-intensity discharge lamp. In this technology, much larger power than rated power is supplied to the discharge lamp immediately after the discharge lamp is lighted.

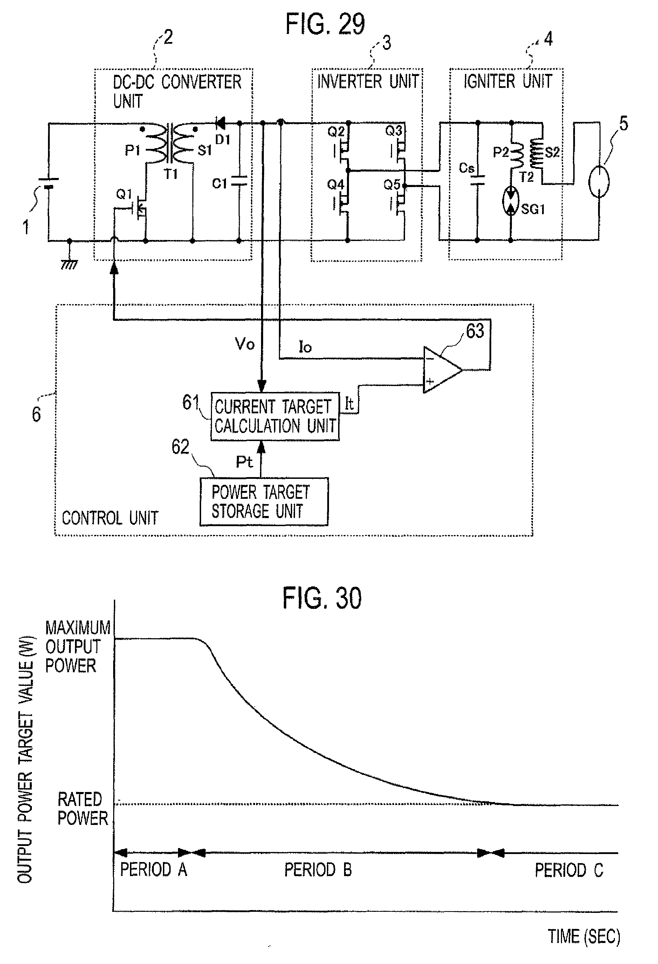

FIG. 29 shows an example of a circuit for lighting the high-intensity discharge lamp. A discharge lamp lighting device is composed of: a direct current power supply 1; a DC-DC converter unit 2; an inverter unit 3; an igniter unit 4; a discharge lamp 5; and a control unit 6. The DC-DC converter unit 2 steps up and down a voltage, which comes from the direct current power supply 1, to a voltage required by the discharge lamp 5. The inverter unit 3 converts such a direct current output voltage of the DC-DC converter unit 2 into a square wave voltage with a low frequency. The igniter unit 4 generates a voltage of several ten kilovolts, which is for starting the discharge lamp 5. The control unit 6 detects an output voltage detection value Vo and an output current detection value Io, and controls the DC-DC converter unit 2 so that output power thereof can become an output power target value Pt. Circuit configurations of the respective units are shown below.

The DC-DC converter unit 2 is composed as follows. A switching element Q1 is connected in series to the direct current power supply 1. The switching element Q1 switches between a primary side P1 of a transformer T1 of the DC-DC converter unit 2 and a primary side of the transformer T1 thereof. A diode D1 and a smoothing capacitor C1 are connected in series to a secondary side S1 of the transformer T1. Note that a direction of the diode D1 is a direction of stopping a current generated on the secondary side S1 of the transformer T1 when the switching element Q1 is turned on and the voltage is applied to the primary side P1 of the transformer T1.

A full bridge circuit is connected in parallel to the smoothing capacitor C1 of the DC-DC converter unit 2. This full bridge circuit is composed of switching elements Q2 to Q5. This described configuration composes the inverter unit 3.

In the igniter unit 4, a capacitor Cs, a series circuit of a primary side P2 of a transformer T2 and a spark gap SG1, and a series circuit of a secondary side S2 of the transformer T2 and the discharge lamp 5 are connected in parallel to output terminals of the full bridge circuit. This described circuit except the discharge lamp 5 composes the igniter unit 4.

The control unit 6 includes: a current target calculation unit 61; a power target storage unit 62; and an error amplifier 63. The current target calculation unit 61 divides, by the output voltage detection value Vo, the output power target value Pt, which is an output of the power target storage unit 62, and is a target value of power to be supplied to the discharge lamp 5. In such a way, the current target calculation unit 61 obtains an output current target value It. The error amplifier 63 compares the output current target value It and the output current detection value Io with each other. The error amplifier 63 outputs an output control signal to the DC-DC converter unit 2 so that a difference ceases to occur between the output current target value It and the output current detection value Io.

In order to accelerate the rise of the luminous flux of the discharge lamp 5 and prevent overshoot and undershoot of the luminous flux by using the above-described configuration, the power target storage unit 62 stores a curve of the output power target value Pt with respect to a time as shown in FIG. 30. After the discharge lamp 5 is started, the power target storage unit 62 outputs the output power target value Pt that goes along the curve shown in FIG. 30. Note that the output power target value Pt may be created by charging and discharging electric charges to and from a capacitor.

By the above-described configuration, the discharge lamp lighting device applies, to the discharge lamp 5, electric energy equivalent to the output power target value Pt in FIG. 30. In a period A, power double or more the rated power is applied to the discharge lamp 5, and the luminous flux is raised rapidly (in approximately four seconds). In a period B, the output power target value Pt is smoothly reduced in approximately 40 to 50 seconds so that the luminous flux of the discharge lamp 5 cannot cause the overshoot or the undershoot. In a period C, the output power target value Pt is gradually approximated to the rated output.

However, the above-described control is control to be performed in the case where the discharge lamp 5 is in a cool state (initially started). If the above-described control is performed in a state where the discharge lamp is warm, the discharge lamp 5 emits light excessively during the period A and the period B. For example, such excessive light emission occurs in the case where the lighted discharge lamp 5 is relighted (restarted) immediately after being turned off.

Accordingly, in response to the state of the discharge lamp 5, the power target storage unit 62 starts to output the output power target value Pt, which is with respect to the time, from a time in the period A and the period B, and thereby suppresses the power to be supplied to the discharge lamp 5. In such a way, the discharge lamp lighting device prevents the excessive light emission at the time when the discharge lamp 5 is restarted.

Operations of the discharge lamp lighting device are described below. When the power supply is turned on, and the switching element Q1 is turned on, a current flows through the primary side P1 of the transformer T1 and the switching element Q1. However, on the secondary side S1 of the transformer, the current is inhibited by the diode D1. Therefore, energy of the secondary side S1 of the transformer T1 is accumulated in the transformer T1. Next, when the switching element Q1 is turned off, the current flows through a route of the secondary side S1 of the transformer T1, the capacitor C1 and the diode D1. In such a way, the energy accumulated in the transformer T1 is moved to the smoothing capacitor C1.

Before the discharge lamp 5 is started, the discharge lamp 5 is in an open state. Therefore, a voltage of the capacitor C1 rises. In the inverter unit 3, the switching elements Q2 and Q5 are fixed to be on, and the switching elements Q3 and Q4 are fixed to be off. In such a way, a voltage of the capacitor Cs rises. When the voltage of the capacitor Cs becomes a predetermined voltage or more, the spark gap SG1 breaks down. The voltage is instantaneously applied to the primary side P2 of the transformer T2. A high voltage obtained by multiplying the voltage, which is applied to the primary side P2 of the transformer T2, by a turns ratio of the transformer T2 is applied to the secondary side S2 of the transformer T2. The discharge lamp 5 breaks down by this high voltage (approximately several ten kilovolts). At this moment, the current flows through the discharge lamp 5 from the DC-DC converter unit 2, and the discharge lamp 5 shifts to an arc discharge.

After the discharge lamp 5 is lighted, the current target calculation unit 61 divides the output power target value Pt, which is outputted by the power target storage unit 62, by the output voltage detection value Vo while switching an output polarity of the inverter unit 3 at a predetermined time interval. In such a way, the current target calculation unit 61 obtains the output current target value It. The error amplifier 63 compares this output current target value It and the detected output current detection value Io with each other, and outputs the output control signal corresponding to an error amount therebetween to the DC-DC converter unit 2. In such a way, the discharge lamp lighting device controls the DC-DC converter unit 2 to adjust the output of the DC-DC converter unit 2. In such a manner as described above, the operations to stably light the discharge lamp 5 are realized.

Prior Art Literatures

Patent Literatures

Patent Literature 1: Japanese Patent No. 2946384
Patent Literature 2: Japanese Patent Laid-Open Publication No. 2000-235899

DISCLOSURE OF THE INVENTION

Problems to be Solved by the Invention

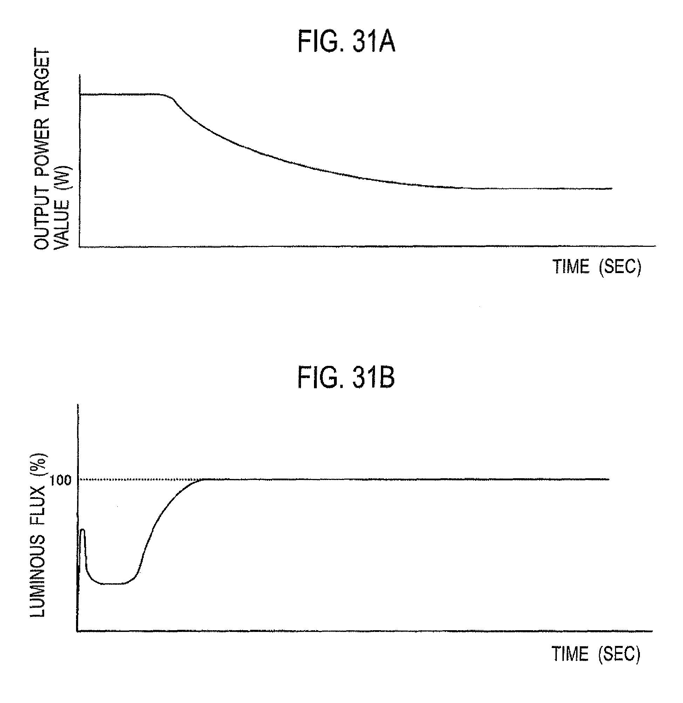

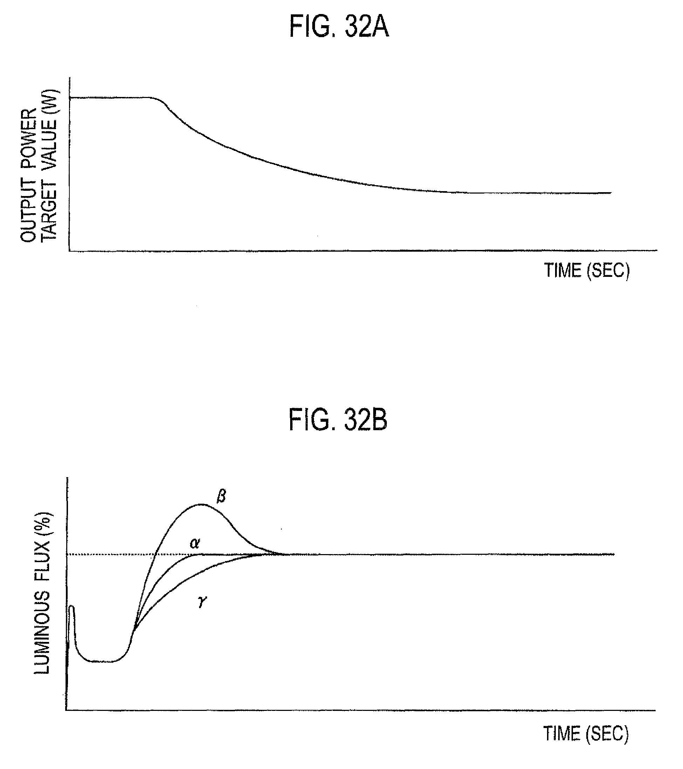

In the above-mentioned conventional control, when the power is supplied as shown in FIG. 31A, the luminous flux of the discharge lamp 5 usually changes as shown in FIG. 31B. However, the discharge lamp 5 has an individual difference and the like owing to an error in manufacturing thereof. Therefore, variations occur in the rise of the luminous flux in the control using the curve with the constant output power target value. When the power is supplied as shown in FIG. 32A, there has been a problem that, as shown in FIG. 32B, an overshoot characteristic $\beta$ in which the rise is steep is present with respect to a characteristic $\alpha$ representing a standard rise of the discharge lamp 5. Moreover, there has been a problem that, as shown in FIG. 32B, a characteristic $\gamma$ in which the rise is gentle with respect to the characteristic $\alpha$ representing the standard rise of the discharge lamp 5.

In recent years, from a viewpoint of reducing the environmental load, a high-intensity discharge lamp (hereinafter, described as a mercury-free high-intensity discharge lamp) composed by eliminating mercury from the high-intensity discharge lamp has been developed. In comparison with the conventional high-intensity discharge lamp (hereinafter, described as a mercury-containing high-intensity discharge lamp) containing the mercury, in the mercury-free high-intensity discharge lamp, output power thereof at the time of rated lighting is equivalent; however, a tube voltage thereof is approximately a half.

For example, in the case where the rated power is 35 W, in the mercury-containing high-intensity discharge lamp, a rated discharge lamp voltage thereof is 85V, and a rated discharge lamp current thereof is 0.4 A. As opposed to this, for example, in the case where the rated power is 35 W, in the mercury-free high-intensity discharge lamp, a rated discharge lamp voltage thereof becomes 42V, and a rated discharge lamp current thereof becomes 0.8 A.

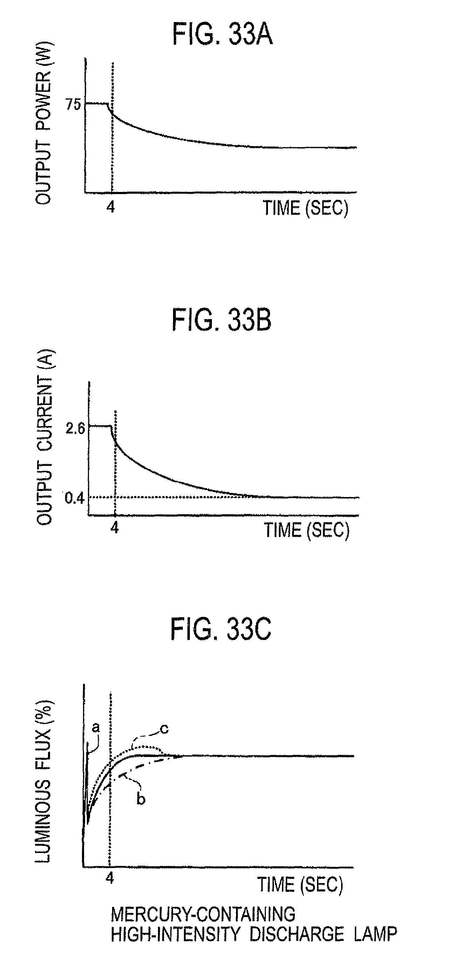

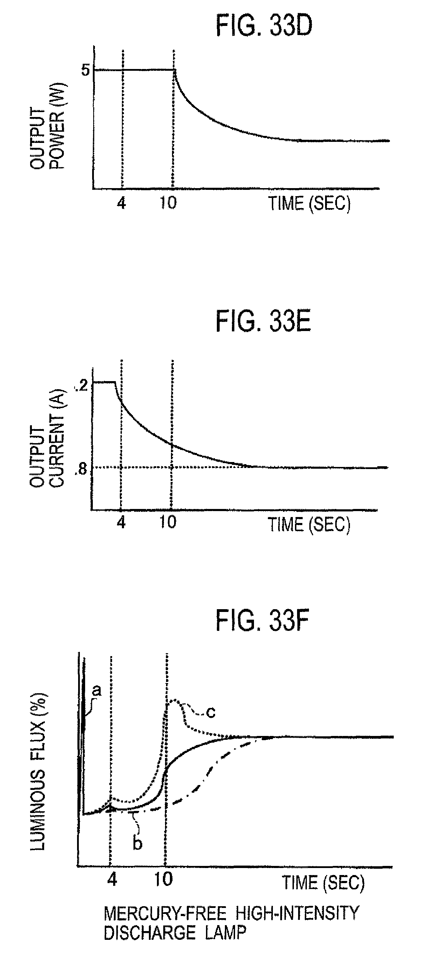

The mercury-containing high-intensity discharge lamp is supplied with the maximum output power immediately after the start, whereby the mercury has emitted light to raise the luminous flux. Specifically, in the period A of FIG. 30, the maximum output power has been supplied to the mercury-containing high-intensity discharge lamp for approximately four seconds. However, in the mercury-free high-intensity discharge lamp, the light emission by the mercury does not occur, and accordingly, the rise of the luminous flux has been slow. Accordingly, in a lighting device of the mercury-free high-intensity discharge lamp, in order to rapidly raise the luminous flux, there is performed control to increase the maximum output power at the starting time as shown in FIG. 33D, and to also increase a current value at the maximum output time as shown in FIG. 33E. As opposed to this, for the mercury-containing high-intensity discharge lamp, the maximum output power at the starting time is controlled as shown in FIG. 33A, and the current value at the maximum output time is controlled as shown in FIG. 33B. In such a way, the luminous flux from the mercury-containing high-intensity discharge lamp is changed as shown in FIG. 33C.

Therefore, in comparison with the lighting device of the mercury-containing high-intensity discharge lamp, problems as below have occurred or become striking in the lighting device of the mercury-free high-intensity discharge lamp.

«Problem 1»

In the mercury-free high-intensity discharge lamp, as in a characteristic c in FIG. 33F, the above-described variations in the rise of the luminous flux are further increased. As opposed to this, in the mercury-containing high-intensity discharge lamp, the variations of the luminous flux are small as in a characteristic c in FIG. 33C. In the mercury-free high-intensity discharge lamp, with regard to the variations of the rise of the luminous flux among the lamps, it is desired that the luminous flux for four seconds after the start be approximately 25% to 45% of the luminous flux at the time of the rated lighting, and be free from the overshoot thereof. As means for suppressing the variations, means as shown in Japanese Patent Laid-Open Publication No. 2005-19337 has been proposed. However, if the variations of the rise of the luminous flux are increased, then a correction amount of the variations of the luminous flux is also increased. Therefore, it becomes difficult to realize a rise of a luminous flux with a small feeling of wrongness caused by the overshoot, undershoot, and further, flickering of the luminous flux.

«Problem 2»

In the mercury-free high-intensity discharge lamp, as in a characteristic b in FIG. 33F, when the constant maximum output power is continuously supplied after the elapse of approximately four seconds after the start, the rise of the luminous flux becomes slow, and the luminous flux is decreased in the worst case. As opposed to this, in the mercury-containing high-intensity discharge lamp, as in a characteristic b in FIG. 33C, the slowness of the rise of the luminous flux and the decrease of the luminous flux are suppressed. In such a way, in the mercury-free high-intensity discharge lamp, the feeling of wrongness, which is felt when the luminous flux rises at the starting time, is increased. It is desired that the high-intensity discharge lamp be free from the feeling of wrongness at the rising time of the luminous flux.

«Problem 3»

As shown in FIG. 33D, the maximum output power to be supplied to the mercury-free high-intensity discharge lamp is increased, and as shown in FIG. 33E, the maximum current to be supplied to the mercury-free high-intensity discharge lamp is increased. In the mercury-containing high-intensity discharge lamp, the maximum output power is low as shown in FIG. 33A, and the maximum current is low as shown in FIG. 33B. Therefore, as in a characteristic a in FIG. 33F, a flash at the starting time of the mercury-free high-intensity discharge lamp is increased. Therefore, in the mercury-free high-intensity discharge lamp, the feeling of wrongness is increased for the luminous flux at the starting time. In the high-intensity discharge lamp, it is desired that the flash be as small as possible.

«Problem 4»

It is necessary to ensure the luminous flux at the point of time when four seconds elapsed after the start at approximately 25% to 45% thereof at the time of the rated lighting, and also thereafter, to raise the luminous flux of the mercury-free high-intensity discharge lamp without delay. For this purpose, it is necessary to supply the maximum output power, of which value is much higher, to the mercury-free high-intensity discharge lamp for a long time. This is realizable by increasing ratings of a variety of components for use in the discharge lamp lighting device. However, this causes scale and cost increases of the discharge lamp lighting device. It is desired to realize the lighting device of the mercury-free high-intensity discharge lamp while suppressing the scale and cost increases of the discharge lamp lighting device.

The present invention has been made in consideration of the above-mentioned problems. It is an object of the present invention to enable scale and cost reductions of the lighting device. Moreover, it is an object of the present invention to reduce the flash at the starting time. Furthermore, it is an object of the present invention to suppress the feeling of wrongness at the rising time of the luminous flux. Still further, it is an object of the present invention to easily suppress variations among the discharge lamps.

Means for Solving the Problems

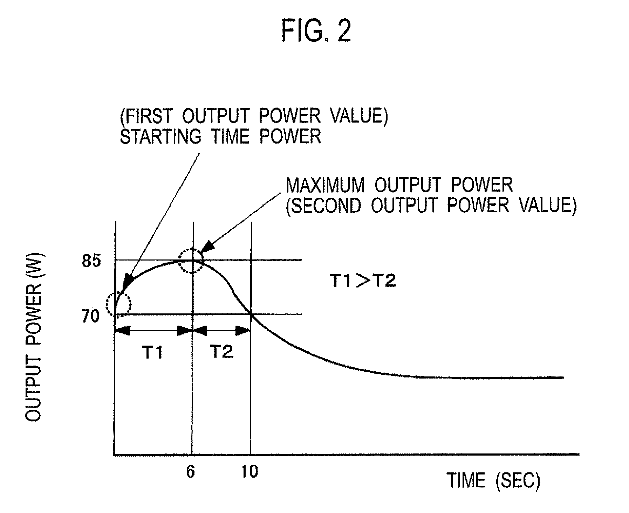

In order to achieve the foregoing objects, a discharge lamp lighting device is composed of: a lighting circuit unit that receives a direct current voltage, and converts the direct current voltage into an output required by a discharge lamp; a discharge lamp voltage detection unit that detects a discharge lamp voltage; a discharge lamp current detection unit that detects a discharge lamp current; and a control unit that receives values of the detected discharge lamp voltage and discharge lamp current, and controls the lighting circuit unit to achieve a predetermined target power value (refer to FIG. 29). After the discharge lamp is started, the control unit controls the predetermined target power value to be reduced from an output power value larger than a rated power value to the rated power value for several seconds to several ten seconds. In this discharge lamp lighting device, the control unit sets a target power value after the discharge lamp is started at a first output power value larger than the rated power value, and increases the target power value toward a second output power value as a maximum output power value for a first predetermined time after the discharge lamp is started (refer to FIG. 2).

The above-described discharge lamp lighting device is **characterized in that** the first output power value is 1.5 times or more the rated power value, the second output power value is twice or more the rated power value, and a relationship of: (second output power value - first output power value) $\geq$ 10 W is established.

The above-described discharge lamp lighting device is **characterized in that** the first predetermined time T1 is two seconds or more and ten seconds or less.

The above-described discharge lamp lighting device is **characterized in that** a second predetermined time T2 from reduction of the output from the second output power value to passage of the output through the first output power value is set shorter than the first predetermined time T1.

The above-described discharge lamp lighting device is **characterized in that** the control unit increases the output by using a polynomial function such as a quadratic function until the first predetermined time.

The above-described discharge lamp lighting device is **characterized in that** the control unit reduces the output by using a polynomial function such as a quadratic function until a third predetermined time after the first predetermined time.

The above-described discharge lamp lighting device is **characterized in that**, in response to a decrease of the direct current voltage, the control unit reduces both of the second output power value and an output power value at a starting time of the discharge lamp so that a following relationship can be established:

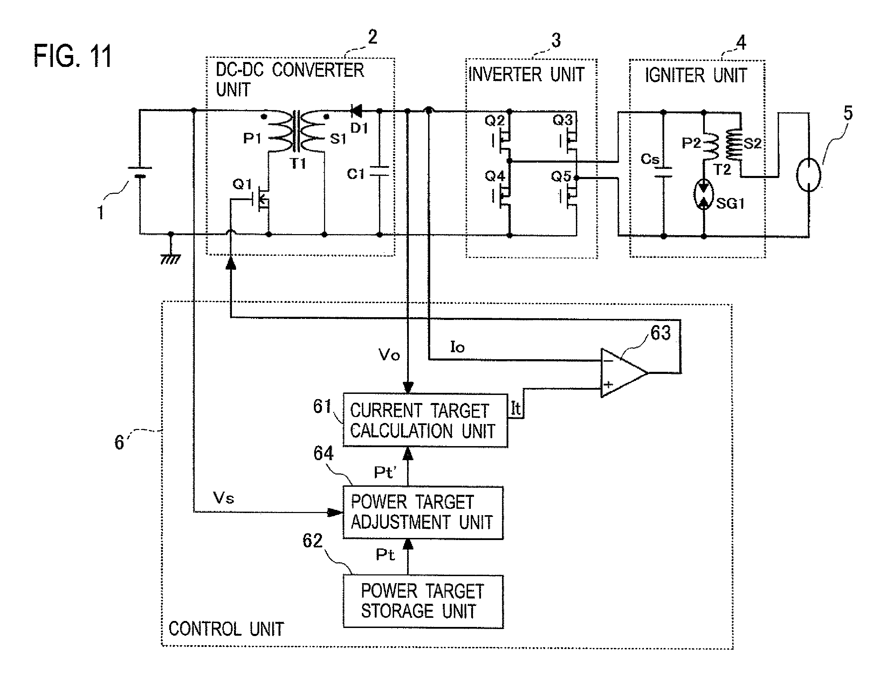

second output power value > output power value at starting time of discharge lamp $\geq$ rated power value (refer to FIG. 11 to FIG. 15)

The above-described discharge lamp lighting device is **characterized in that**, in response to that a temperature of the lighting device rises, the control unit 6 reduces both of the second output power value and an output power value at a starting time of the discharge lamp so that a following relationship can be established:

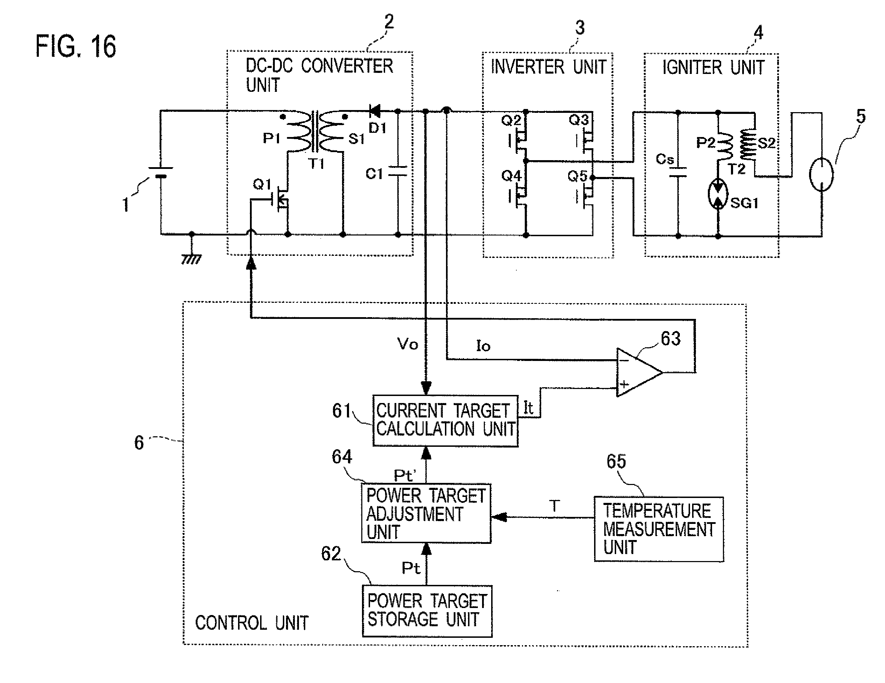

second output power value > output power value at starting time of discharge lamp $\geq$ rated power value (refer to FIG. 16 to FIG. 20)

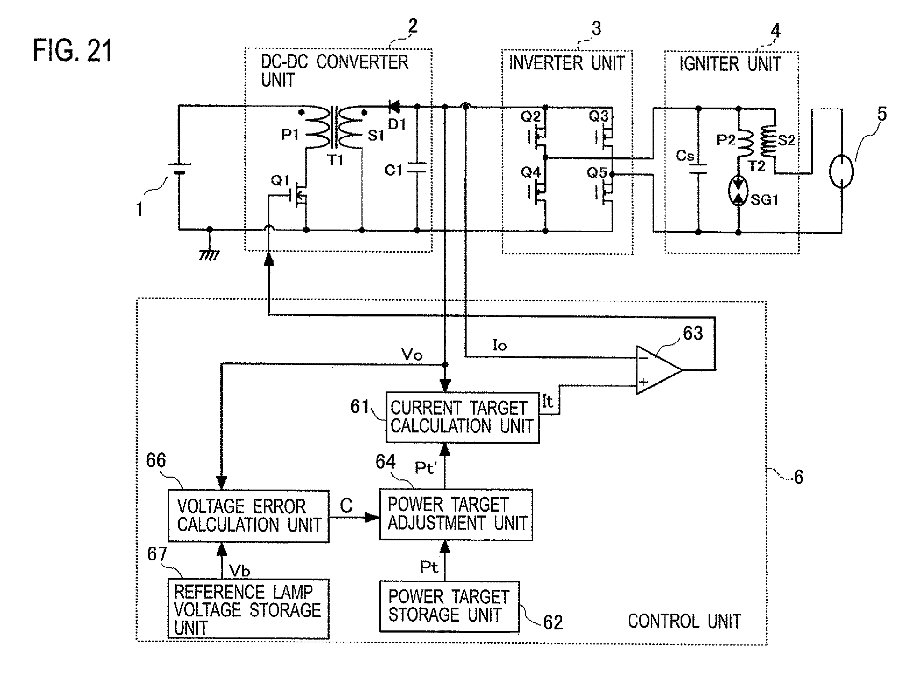

The above-described discharge lamp lighting device is **characterized in that** the control unit includes: a reference discharge lamp voltage storage unit that stores a target voltage value of a reference discharge lamp in association with an elapsed time after the discharge lamp is started; and a power target value adjustment unit that, in response to a difference between an average value of voltages detected by the voltage detection unit plural times at a constant interval and the target voltage value read out from the reference discharge lamp voltage storage unit, sets an absolute value of a power correction value larger as an absolute value of the difference is larger, and corrects the target power value to a corrected target power value by using the power correction value (refer to FIG. 21 to FIG. 26). The discharge lamp lighting device is **characterized in that**, on and after a fourth predetermined time after the discharge lamp 5 is started, the control unit controls the target power value to be the corrected target power value, and establishes a relationship of: first predetermined time < fourth predetermined time.

The above-described discharge lamp lighting device is **characterized in that** the discharge lamp 5 is a vehicle-mounted high-intensity discharge lamp that does not substantially envelope mercury therein.

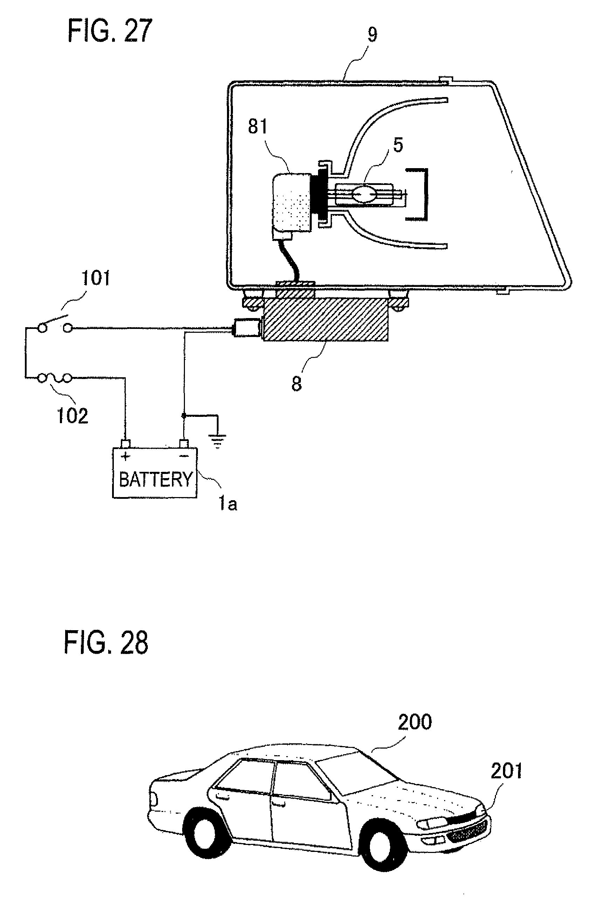

Any of the above-described discharge lamp lighting device is mounted on a vehicle-mounted headlight (refer to FIG. 27).

The above-described vehicle-mounted headlight is mounted on a vehicle (refer to FIG. 28).

ADVANTAGEOUS EFFECTS OF THE INVENTION

In accordance with the present invention, the output power at the starting time of the discharge lamp is set at a value that is smaller than the maximum output power value and larger than the rated power, and the output power is increased from the set value to the maximum output power value. In such a way, a time period while the maximum output power is being outputted is shortened, thus making it possible to realize the scale and cost reductions of the discharge lamp lighting device.

Moreover, in accordance with the discharge lamp lighting device, the output power value (output current value) at the starting time of the discharge lamp is reduced. In such a way, in accordance with the discharge lamp lighting device, the flash at the starting time of the discharge lamp can also be reduced.

Furthermore, in accordance with the discharge lamp lighting device, the output power value at the starting time of the discharge lamp is set at the value smaller than the maximum output power value. In such a way, the discharge lamp lighting device becomes capable of increasing the output power value, and increases the output power particularly at the elapse of around four seconds from the start of the discharge lamp, when the luminous flux is decreased. In such a way, the discharge lamp lighting device can suppress the feeling of wrongness that the luminous flux is decreased during a period while raising the luminous flux of the discharge lamp.

Moreover, in accordance with the discharge lamp lighting device, the output power at the starting time of the discharge lamp is reduced. In such a way, in accordance with the discharge lamp lighting device, it becomes possible to reduce the variations among the discharge lamps at the time when the luminous flux rises, the variations occurring when the same power is supplied, and it becomes possible to easily suppress the variations.

BRIEF DESCRIPTION OF THE DRAWINGS

FIG. 1 is a flowchart showing operations of Embodiment 1 of the present invention.

FIG. 2 is an explanatory view showing a temporal change of output power in a starting process of Embodiment 1 of the present invention.

FIG. 3A is an explanatory view showing comparison in operation between Embodiment 1 of the present invention and a conventional example.

FIG. 3B is an explanatory view showing comparison in operation between Embodiment 1 of the present invention and the conventional example.

FIG. 3C is an explanatory view showing comparison in operation between Embodiment 1 of the present invention and the conventional example.

FIG. 3D is an explanatory view showing comparison in operation between Embodiment 1 of the present invention and the conventional example.

FIG. 4 is an explanatory view showing effects of Embodiment 1 of the present invention.

FIG. 5 is a circuit diagram of one modification example of Embodiment 1 of the present invention.

FIG. 6 is an explanatory view showing a basic operation of Embodiment 2 of the present invention.

FIG. 7 is an explanatory view showing an operation of one modification example of Embodiment 2 of the present invention.

FIG. 8 is an explanatory view showing an operation of another modification example of Embodiment 2 of the present invention.

FIG. 9 is an explanatory view showing an operation of still another modification example of Embodiment 2 of the present invention.

FIG. 10 is an explanatory view showing an operation of another modification example of Embodiment 2 of the present invention.

FIG. 11 is a circuit diagram of Embodiment 3 of the present invention.

FIG. 12 is a flowchart showing operations of Embodiment 3 of the present invention.

FIG. 13 is an explanatory view showing a basic operation of Embodiment 3 of the present invention.

FIG. 14 is an explanatory view showing temporal changes of maximum output power and starting time power with respect to a power supply voltage in Embodiment 3 of the present invention.

FIG. 15 is an explanatory view showing temporal changes of output power in a starting process of Embodiment 3 of the present invention.

FIG. 16 is a circuit diagram of Embodiment 4 of the present invention.

FIG. 17 is a flowchart showing operations of Embodiment 4 of the present invention.

FIG. 18 is an explanatory view showing a basic operation of Embodiment 4 of the present invention.

FIG. 19 is an explanatory view showing temporal changes of maximum output power and starting time power with respect to a detected temperature in Embodiment 4 of the present invention.

FIG. 20 is an explanatory view showing temporal changes of output power in a starting process of Embodiment 4 of the present invention.

FIG. 21 is a circuit diagram of Embodiment 5 of the present invention.

PIG. 22 is a flowchart showing operations of Embodiment 5 of the present invention.

FIG. 23 is an explanatory view showing a temporal change of output power in a starting process of Embodiment 5 of the present invention.

FIG. 24A is an explanatory view showing comparison in operation between Embodiment 5 of the present invention and the conventional example.

FIG. 24B is an explanatory view showing comparison in operation between Embodiment 5 of the present invention and the conventional example.

FIG. 25A is an explanatory view showing an effect by a correction operation of Embodiment 5 of the present invention.

FIG. 25B is an explanatory view showing an effect by the correction operation of Embodiment 5 of the present invention.

FIG. 25C is an explanatory view showing an effect by the correction operation of Embodiment 5 of the present invention.

FIG. 26 is a characteristic diagram showing a relationship between a corrected power value and a lamp voltage error in Embodiment 5 of the present invention.

FIG. 27 is a schematic configuration diagram of a headlight fixture that mounts thereon a high-intensity discharge lamp lighting device of the present invention.

FIG. 28 is a perspective view of a vehicle that mounts thereon the headlight fixture of the present invention.

FIG. 29 is a circuit diagram of a conventional high-intensity discharge lamp lighting device.

FIG. 30 is an explanatory view showing a temporal change of output power in a starting process of the conventional example.

FIG. 31A is an explanatory view showing a problem of the conventional example.

FIG. 31B is an explanatory view showing the problem of the conventional example.

FIG. 32A is an explanatory view showing another problem of the conventional example.

FIG. 32B is an explanatory view showing the another problem of the conventional example.

FIG. 33A is an explanatory view showing sill another problem of the conventional example.

FIG. 33B is an explanatory view showing the still another problem of the conventional example.

FIG. 33C is an explanatory view showing the still another problem of the conventional example.

FIG. 33D is an explanatory view showing the still another problem of the conventional example.

FIG. 33E is an explanatory view showing the still another problem of the conventional example.

FIG. 33F is an explanatory view showing the still another problem of the conventional example.

BEST MODE FOR CARRYING OUT THE INVENTION

(Embodiment 1)

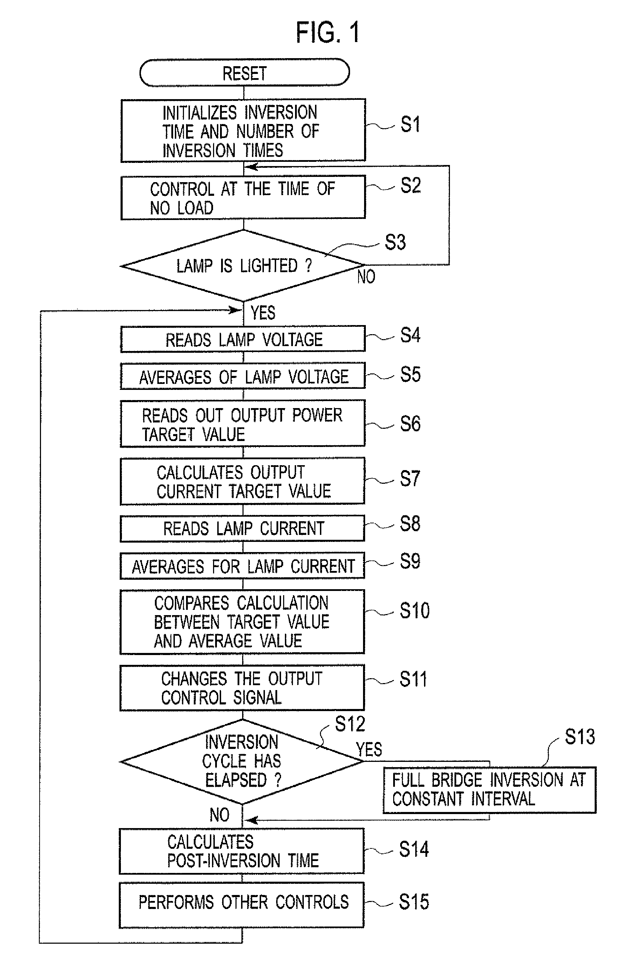

FIG. 1 shows microcomputer operations for realizing control of this embodiment. Circuit operations and a circuit diagram are the same as those in the conventional example, and accordingly, a description thereof is omitted here. A flowchart of FIG. 1 shows an operation procedure at the time when the control unit 6 that performs the constant power control in FIG. 29 is realized by a microcomputer. A different point of Embodiment 1 from the conventional example is that the change of the output power from the start of the discharge lamp 5 is changed like a power curve shown in FIG. 2.

During a time period (T1) from the start of the discharge lamp 5 to the elapse of six seconds, the power curve of FIG. 2 raises the output power in accordance with a negative quadratic function:

$$W = 15(t-6)2/36 + 85$$

Until the elapse of around ten seconds after the start of the discharge lamp 5, the power curve drops the output power in accordance with a negative quadratic function:

$$W = -15(t-6)2/16+85$$

Thereafter, the power curve drops the output so as to become a similar curve to the charge/discharge curve of the capacitor in a similar way to the conventional example. Here in the above-described expressions, W is an output power target value, and t is a time.

A detailed description is made below of a flow of the microcomputer.

In Step S1, the control unit 6 initializes variables such as an inversion time and number of inversion times of the inverter unit 3 at the time when the power supply is turned on (at the time of RESET input).

In Step S2, the control unit 6 sets control at the time of no load before lighting the discharge lamp 5. Specifically, in order that the igniter unit 4 can operate, the control unit 6 sets the output voltage of the DC-DC converter unit 2 at a no-load secondary voltage (several hundred volts) in a state of stopping polarity inversion of the inverter unit 3.

In Step S3, it is determined whether or not the discharge lamp 5 is lighted. In the case where the discharge lamp 5 is not lighted, the flow returns to Step S2. Whether or not the discharge lamp 5 is lighted can be determined by the drop of the output voltage of the DC-DC converter unit 2 or the increase of the output current thereof. In the case where the discharge lamp 5 is lighted, the flow proceeds to a loop for performing the constant power control to be described below. Moreover, a time is measured from the time when the discharge lamp 5 is started (the time when it is determined that the discharge lamp 5 is lighted in Step S3).

In Step S4, the control unit 6 reads the discharge lamp voltage (output voltage detection value Vo) by A/D conversion of the microcomputer.

In Step S5, the control unit 6 performs averaging of the lamp voltage by using the read value of the lamp voltage in Step S4 and those values in the past. An example of the averaging is mentioned. With regard to the output voltage detection value Vo, only three values from the newest value are stored (updated at the reading time), and when the next newest value is read in Step S4, this newest value is summed up with the above-described three values, and the obtained sum is divided by four.

In Step S6, the power target storage unit 62 of the control unit 6 reads out the output power target value Pt at that time from the table stored in a ROM in the microcomputer. In the ROM of the microcomputer, data of the output power target value with respect to the time, which is shown in FIG. 2, is stored in advance. A value of the output power target value Pt (output power) with respect to the time measured from the point of time when the discharge lamp 5 starts to be lighted is read out from the ROM. The control unit 6 performs control so that the read-out output power target value Pt can be applied to the discharge lamp 5.

In Step S7, the current target calculation unit 61 calculates the output current target value It by a calculation expression of the discharge lamp voltage average value calculated in Step S5 and of the output power target value Pt read-out in Step S6.

In Step S8, the discharge lamp current is read by the A/D conversion of the microcomputer. At this time, the control unit 6 reads the output current detection value Io.

In Step S9, the control unit 6 adds the past values of the output current detection value Io to the read value of the output current detection value Io, which is obtained in Step S8, and performs averaging for the output current detection value Io as mentioned in the above-described example.

In Step S10, the error amplifier 63 performs a comparison calculation between the average value of the output current target value It, which is an output current command value and is calculated in Step S7, and the average value of the output current target value It, which is calculated in Step S9.

In Step S11, the control unit changes the output control signal to be supplied to the DC-DC converter unit 2 based on a result of the comparison by the error amplifier 63 in Step S10.

In Step S12, the control unit 6 determines whether or not an inversion cycle has elapsed from the time of the previous inversion of the inverter unit 3. In the case where the inversion cycle has elapsed from the time of the previous inversion, the output polarity of the inverter unit 3 is inverted.

When it is determined that the inversion cycle has elapsed in Step S12, a polarity inversion command is issued to the inverter unit 3 in Step S13.

In Step S14, a post-inversion time is calculated.

In Step S12, other controls are performed.

By this control, from the start of the discharge lamp 5, the power can be supplied to the discharge lamp 5 in accordance with the power curve shown in FIG. 2.

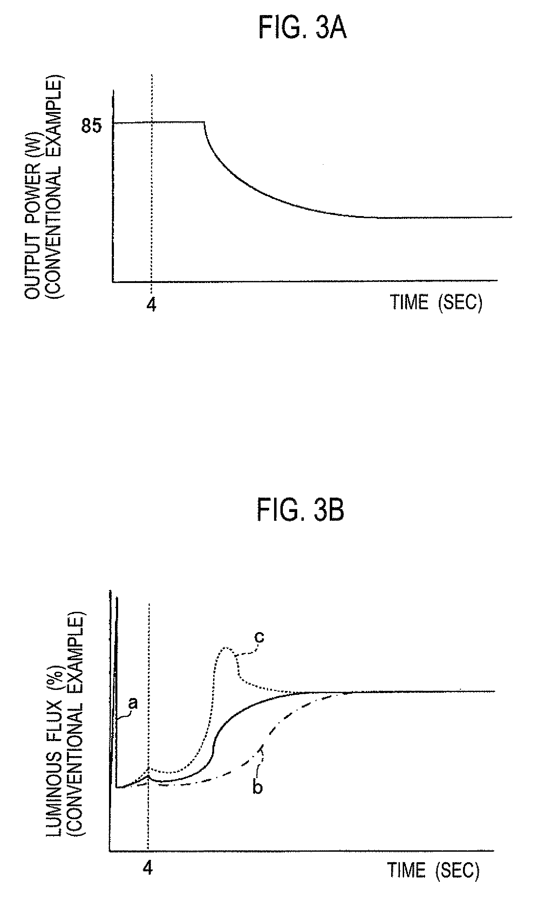

Effects by this embodiment are shown by using FIGS. 3A to 3D.

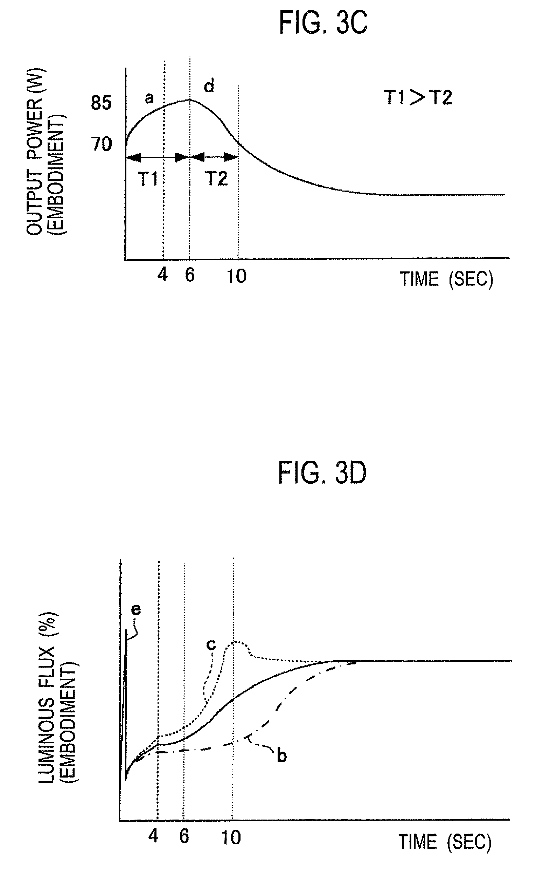

First, as shown in FIG. 3B as the conventional change of the luminous flux and FIG. 3D as a change of a luminous flux in the embodiment, the luminous flux immediately after the start of the discharge lamp 5 is lowered. However, the value of the output power target value Pt can be reduced without changing the luminous flux at the point of time when four seconds have elapsed after the start, which is required in terms of safety, and it becomes possible to realize scale and cost reductions of the discharge lamp lighting device (characteristic a).

Moreover, as in FIG. 3C of the embodiment, the output power target value Pt is continuously raised from the start of the discharge lamp 5 to the point of time when six seconds have elapsed. In such a way, the output power is maintained constant as in FIG. 3A of the conventional example, and it becomes possible to suppress, as in FIG. 3D, the decrease (characteristic b) of the luminous flux, which occurs after the elapse of four seconds as in FIG. 3B of the conventional example.

As described above, the discharge lamp lighting device raises the output power target value Pt from the start of the discharge lamp 5 to the elapse of six seconds (characteristic a). Thereafter, the discharge lamp lighting device sets the output power target value Pt from the start of the discharge lamp 5 to the elapse of around ten seconds in accordance with the negative quadratic function (characteristic d). Moreover, with regard to the time period (T1) from the start of the discharge lamp 5 to the point of time when the output power reaches the maximum output power target value Pt and a reduction time period (T2) from the point of time when the output power reaches the maximum output power target value Pt to the point of reduction time when the output power is reduced to the output power target value Pt of the time when the discharge lamp 5 is started, a relationship therebetween is set as: T1 > T2. Specifically, the discharge lamp lighting device decelerates a rising speed of the output power target value Pt after the start of the discharge lamp 5 more than a reducing speed thereof after such a rise. In such a way, as in FIG. 3B and FIG. 3D, the discharge lamp lighting device realizes a rise of the luminous flux with less overshoot (characteristic c; with less variations of the rise of the luminous flux).

The discharge lamp lighting device sets the rise of the output power target value Pt from the start of the discharge lamp 5 to the elapse of six seconds and the subsequent curve of the output power target value Pt from the start of the discharge lamp 5 to the elapse of around ten seconds in accordance with the negative quadratic function. In such a way, at the time when the output power target value Pt becomes the maximum, the discharge lamp lighting device is capable of preventing an occurrence of a discontinuous point of the output power target value Pt (characteristic d of FIG. 3C).

The discharge lamp lighting device reduces the output power target value Pt at the starting time of the discharge lamp 5, and reduces the maximum value of the output current target value It. In such a way, the flash (characteristic e of FIG. 3D) at the starting time of the discharge lamp 5 can be reduced, and it is possible to prevent the feeling of wrongness, which is felt when the luminous flux rises.

This embodiment mainly describes the effects for the problems which have been shown in the conventional example and occur more significantly when the mercury-free high-intensity discharge lamp is used as the discharge lamp 5. However, it is needless to say that similar effects can be obtained also for the mercury-containing high-intensity discharge lamp. However, the decrease of the luminous flux in the characteristic b does not occur since the mercury-containing high-intensity discharge lamp has mercury light emission. Therefore, it is not necessary to obtain this effect in the mercury-containing high-intensity discharge lamp.

This embodiment is described on the premise that the discharge lamp 5 is the mercury-free high-intensity discharge lamp. However, "a discharge lamp that does not substantially envelop mercury therein" described in the claim of this patent includes both that the discharge lamp does not envelop the mercury therein at all, and that mercury of less than 2 mg (less than 1 mg is more preferable) per 1 cc of a hermetical container is contained. In the conventional mercury-containing high-intensity discharge lamp, mercury of several ten milligrams per 1 cc of the hermetical container is enveloped. Accordingly, in comparison with this conventional case, it can be said that the mercury-free high-intensity discharge lamp does not substantially contain the mercury.

Moreover, in this embodiment, the time while the output power reaches the maximum is set at six seconds. However, the time described above is a time uniquely determined because, as an example, the curve to raise the output power is set as:

$$W = -15(t-6)2/36+85$$

Hence, the time while the output power reaches the maximum is not limited to six seconds. In order to reduce the initial output power, the time is set at approximately two seconds to ten seconds, and then similar effects can be obtained. The current value is the largest during approximately two seconds at the initial stage of the start, and accordingly, a load of the discharge lamp lighting device is increased, and moreover, the overshoot of the luminous flux is increased when the output is raised for ten seconds or more. Because of these points, the time while the output power reaches the maximum is arbitrarily determined.

A first output power value described in the claim refers to an output power value at the starting time of the discharge lamp. Here, the starting time means the point of time immediately after the start. Ideally, the starting time means the point of time at which the power control is started after elapse of a period of several to several hundred milliseconds while the lamp is unstable. The output power at this starting time of the discharge lamp means output power W that is equal to 70 at t = 0. The second maximum output power value means output power value W that is equal to 85 at t = 6.

Moreover, in this embodiment, the output power is continuously raised from the start to the elapse of six seconds, whereby the effects regarding the characteristics a to e in FIGS. 3A to 3D are obtained. However, only the effect of the characteristic b in FIG. 3D will be realizable only by raising the output power target value at the elapse of around four seconds from the start. It is needless to say that it is not always necessary to raise the output power target value before the elapse of four seconds as long as the output power target value is not reduced.

Moreover, it is also needless to say that only the effects regarding the characteristics d and e in FIG. 3C and FIG. 3D will be realizable, for example, only in such a manner that the output power target value from the start to the elapsed point of time of two seconds is set lower than the maximum output power value.

It is apprehended that the rise of the luminous flux may slow down by reducing the output power to the discharge lamp 5. However, it is conceived that the rise of the luminous flux does not cause the problem in terms of safety even in the case where the discharge lamp 5 is used to be mounted on the vehicle if the luminous flux at the elapse of four seconds after the start of the discharge lamp 5 is 25% to 50% (45% is the optimum value) of the luminous flux at the time of the rated lighting. In the mercury-free high-intensity discharge lamp, it has been confirmed that, even if the output is reduced at the starting time of the discharge lamp, it is possible to output, at the elapsed point of time of four seconds, a luminous flux substantially equivalent to that in the case where the output at the elapsed point of time of four seconds is continuously outputted from the start. Hence, rising performance of the luminous flux is satisfied by changing the power curve proposed in this embodiment.

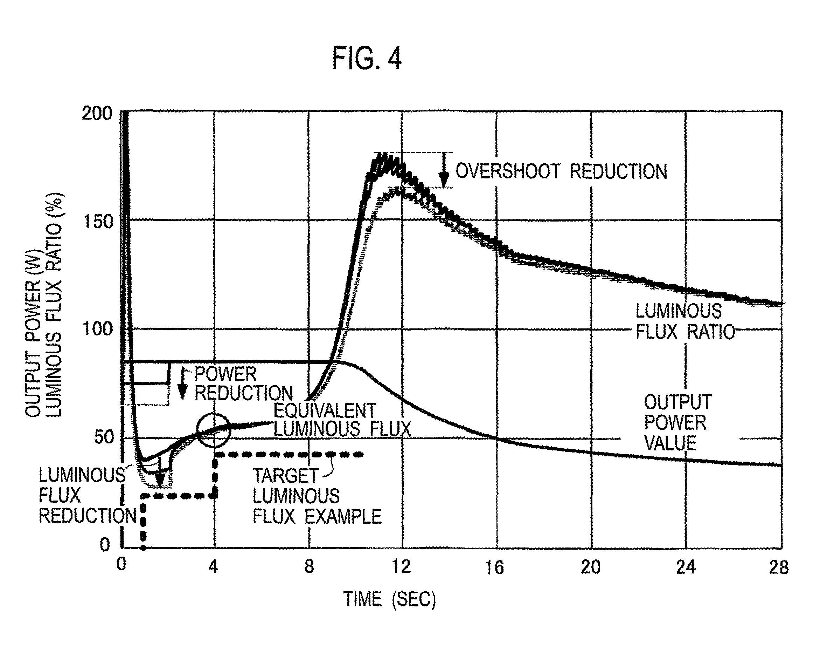

FIG. 4 shows an example of results of confirming the above-described effects and apprehension points. FIG. 4 simultaneously illustrates a state where the luminous flux rises when the constant maximum output power value is outputted and a state where the luminous flux rises when the output for two seconds at the initial stage of the start is reduced at two stages (by -10 W and -20 W of the maximum output power value).

Referring to FIG. 4, the output power target value for two seconds after the start is reduced (by 10 W to 20 W), whereby an amount of the luminous flux for two seconds after the start becomes small in response to the value of the output power. However, thereafter, the output power target value is raised, and the output power value before such reduction is supplied to the discharge lamp 5. It is understood that, in such a manner, the amount of luminous flux at the elapsed point of times of four seconds from the start is hardly affected by whether or not the output is reduced.

Moreover, the amount of luminous flux at the elapsed point of time of four seconds from the start is substantially equivalent between both of the cases. However, it is also apparent that an amount of the overshoot of the luminous flux at the elapse of around ten seconds from the start becomes smaller in the case where the output power at the initial stage of the start is reduced. Hence, it is also understood that the variations of the rise of the luminous flux of the discharge lamp 5 can be suppressed by this embodiment.

It is understood that, in such a way, a luminous flux rising power curve can be realized, which is capable of achieving the output power target value Pt without changing the required amount of luminous flux at the elapsed point of time of four seconds from the start, and capable of reducing the output power, the overshoot of the luminous flux, and the flash.

Moreover, if a difference between the output power target value Pt at the starting time of the discharge lamp 5 and the maximum output power target value Pt is less than 10 W, then the effects regarding the characteristic a and the characteristic e in FIG. 3C and FIG. 3D and particularly, the characteristic c in FIG. 3D are reduced. Therefore, it is desirable to set the difference between these output power target values Pt at 10 W to 20 W. In this embodiment, the output power target value Pt is described to be 15 W, which is the optimum.

In addition to the above, if the output power target value Pt at the starting time of the discharge lamp 5 is set low, then it becomes impossible to achieve the target that at least 25% of the luminous flux at the time of the rated lighting is required as the luminous flux at the elapsed point of time of one second after the start. Besides the above, a temperature rise of the discharge lamp 5 slows down, adversely affecting startability and lifetime of the lamp. Therefore, it is necessary that the output power value at the starting time be set equal to or more than "1.5 × rated power value". Moreover, it is understood that it becomes impossible to achieve the aimed luminous flux at the elapsed point of time of four seconds after the start unless the maximum output power target value Pt is set equal to or more than "2 x rated power value".

Based on these results, it becomes possible to realize the optimum output power target value Pt by setting the output power target value Pt so that a following inequality can be established.

$$10\ W < (\text{maximum output power value} - \text{starting time output}$$

$$\text{power value}) < (\text{starting time output power value} - \text{rated power}$$

$$\text{value})$$

(Embodiment 1')

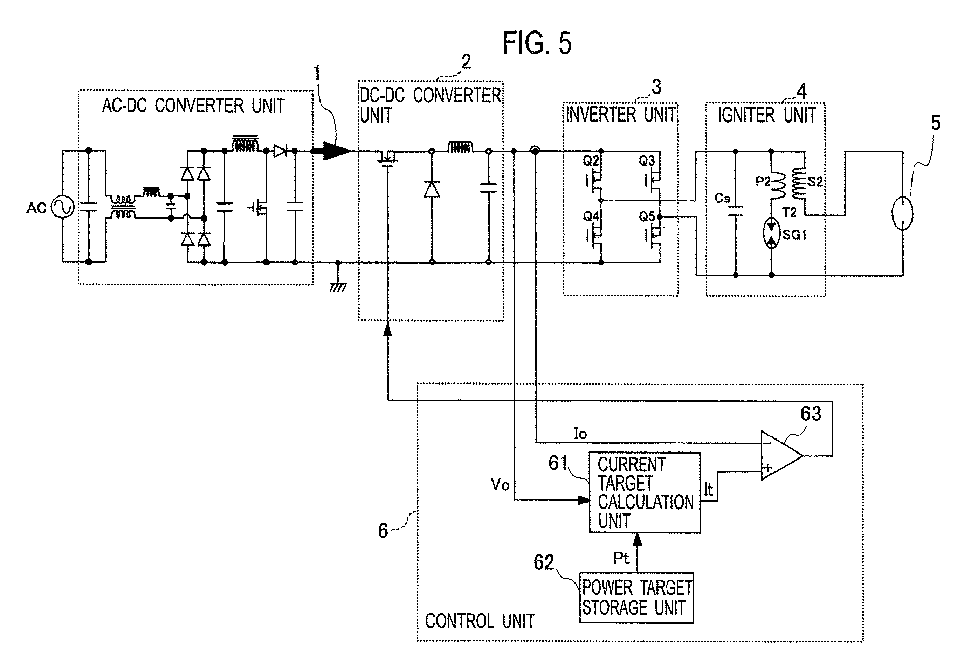

FIG. 5 shows a different example of the discharge lamp lighting device shown in Embodiment 1 (FIG. 29). A different point in FIG. 5 from that in FIG. 29 is that a commercial alternating current power supply is subjected to power conversion by an AC-DC converter unit (step-up chopper in this embodiment), whereby a direct current voltage is obtained, and is used as the direct current power supply 1. The AC-DC converter unit is a step-up chopper in this embodiment. In addition, the DC-DC converter unit 2 is composed in accordance with a step-down chopper method in place of a flyback circuit.

It is needless to say that, also in the case of using the discharge lamp lighting device shown in FIG. 5, similar effects to those in Embodiment 1 can be obtained by realizing the change when the output power target value Pt is set in a similar way to Embodiment 1. The present invention is an invention of which gist is to change the output power to be supplied to the discharge lamp 5 as shown in the claims, and it is needless to say that the present invention does not depend whether or not there are constituent elements such as the AC-DC converter unit, the inverter unit 3 and the igniter unit 4.

(Embodiment 2)

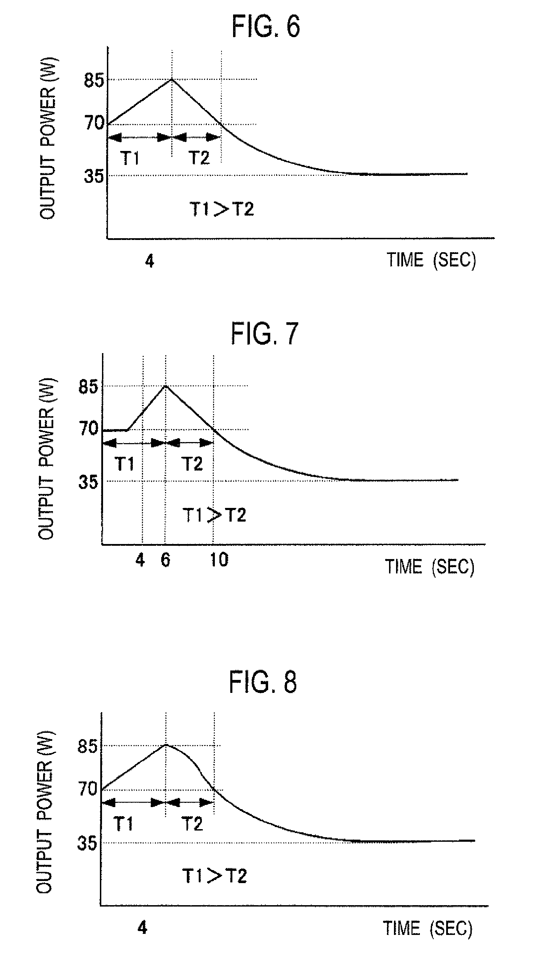

FIG. 6 shows a curve of the output power target value Pt with respect to the time in this embodiment. A circuit configuration and a flow are similar to those in Embodiment 1, and accordingly, a description thereof in this embodiment is omitted.

A point where the curve of the output power target value Pt in FIG. 6 is different from that in Embodiment 1 is that the output power is raised and dropped in a manner of a linear function in the time period (T1) from the start of the discharge lamp 5 to the maximum output and the reduction time period (T2) from the arrival to the maximum output to the power at the starting time of the discharge lamp.

By using the power curve of this embodiment, the output power reduction amount from the case where the constant power is outputted can be increased in comparison with Embodiment 1. In addition, the effects of Embodiment 1 become realizable except the effect regarding the characteristic d of the output power target value Pt in FIG. 3C. Moreover, in the case of realizing the power curve not by the microcomputer but by a circuit, it is possible to create a linear function curve by a constant current circuit and a capacitor, and the power curve is realizable relatively easily.

Moreover, in FIG. 6, the output power target value Pt is continuously raised during the period T1 from the start. However, as shown in FIG. 7, even in the case where the output power target value Pt is set at constant output power at the initial stage of the start, and the output power target value Pt is raised before the elapse of four seconds after the start, similar effects can be obtained.

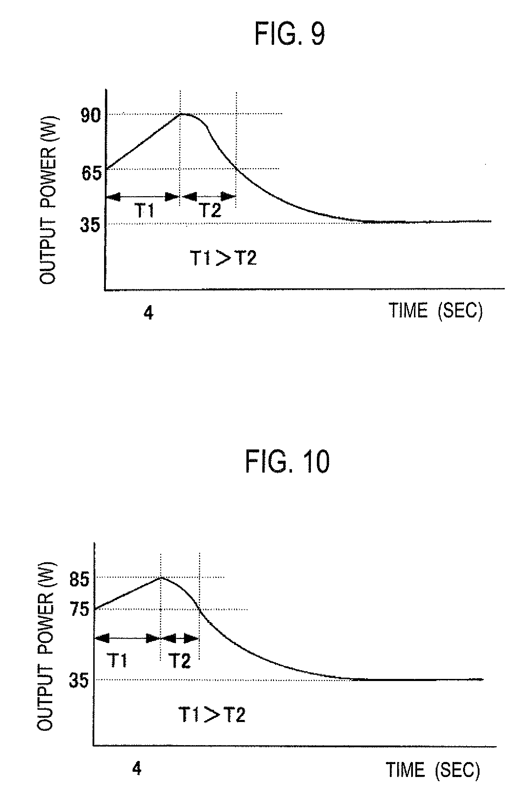

Moreover, even if the output power target value Pt is controlled by using the curve in FIG. 6 with regard to the time period T1 and the output power target value Pt is controlled by using a power curve, which is shown in FIG. 8 and uses the curve of Embodiment 1, with regard to the time period T2, similar effects can be obtained. Besides, power curves shown in FIG. 9 and FIG. 10, in which the output power target value Pt at the starting time and the maximum output power target value Pt are changed, may be used. It is needless to say that, in such a way, different lamps can also be coped with. Moreover, it is needless to say that the discharge lamp lighting device can widen a range, with which the discharge lamp 5 copes, by changing the rated power.

The power curve is created by using the linear function in this embodiment, and the power curve is created by using the quadratic function in Embodiment 1. However, it is needless to say that similar effects can be obtained even if a part of a polynomial function such as a cubic function and a quartic function is used.

In the case where the constant current control is performed for several seconds after lighting the discharge lamp 5, then in the discharge lamp 5, impedance thereof at the lighted time is low, and the impedance is increased as the discharge lamp 5 approaches the stable lighting. Therefore, even if the above-mentioned control for the output power target value Pt is not implemented, such an operation is sometimes performed that the output power target value Pt rises in a similar way to the curve of the output power target value Pt, which is shown in the time period T1 of FIG. 6. However, in the above-described constant current control, the output power target value Pt is changed not in response to the time period but in response to the change of the output voltage detection value Vo as a state of the lamp. Therefore, the following problems occur.

First, in the case where the output voltage detection value Vo is increased in the end of the lifetime of the discharge lamp 5, and the like, the output power target value Pt is increased, and the overshoot of the luminous flux is increased. Meanwhile, in the case where the output voltage detection value Vo is lowered owing to slow leak and the like, the output power target value Pt is lowered, and a necessary light quantity can be obtained.

Moreover, in the circuit block diagram of the discharge lamp lighting device, which is shown in FIG. 29 or the like, the discharge lamp 5 is illustrated as a separate body from the igniter unit 4. However, in the field of the vehicle-mounted high-intensity discharge lamp, a lamp in which the discharge lamp 5 and the igniter unit 4 are integrated with each other is also mass-produced. In this case, even in the case where the output power of the discharge lamp lighting device is set at the constant power, the power is consumed by a resistance amount of such a winding S2 of the transformer T2 arranged in the igniter unit 4. In such a way, the power to be supplied to the discharge lamp 5 becomes a value obtained by subtracting the above-described power consumption from the above-described constant power. Note that, in FIG. 29, the discharge lamp lighting device is a circuit unit that houses therein the DC-DC converter unit 2, the inverter unit 3 and the control unit 6 except the igniter unit 4.

Moreover, the above-described power consumption is changed by the value of the current to be supplied to the discharge lamp 5. In the discharge lamp 5, the impedance at the starting time is low, and accordingly, such a current value is increased, and the above-described power consumption is increased. In such a way, the above-described power consumption becomes the maximum at the starting time, and is thereafter reduced. Specifically, the power to be supplied to the discharge lamp 5 exhibits a change to rise from the starting time. However, also in the above-described control, the above-described power consumption is changed in response to the state of the discharge lamp 5. Therefore, the following problems occur.

First, in the case where the output voltage detection value Vo is lowered in the end of the lifetime of the discharge lamp 5, and the like, the power consumption in the winding S2 of the transformer T2 is reduced. As a result, the output power to the discharge lamp 5 is increased, and the overshoot of the luminous flux is increased. Meanwhile, in the case where the output current detection value Io is increased owing to the slow leak and the like, the power consumption in the winding S2 of the transformer T2 is increased. As a result, the output power to the discharge lamp 5 is reduced, and the necessary light quantity cannot be obtained.

The control in this embodiment performs the constant power control by using the power curve in which the output to the discharge lamp 5 is rising for a period of several seconds from the start. This control is free from the change of the output power, which is as described above and depends on the state of the discharge lamp 5, and always realizes a stable rise of the luminous flux.

(Embodiment 3)

FIG. 11 shows a circuit configuration of this embodiment.

A point where the circuit configuration of this embodiment is different from the circuit configurations (in FIG. 29 in the conventional example) of Embodiments 1 and 2 is that the control unit 6 has a function to detect a power supply voltage detection value Vs. Moreover, another point where the circuit configuration of this embodiment is different from the circuit configurations (in FIG. 29 of the conventional example) of Embodiments 1 and 2 is that a power target adjustment unit 64 that adjusts the output power target value Pt in response to the power supply voltage detection value Vs detected by the control unit 6 is provided between the power target storage unit 62 and the current target calculation unit 61.

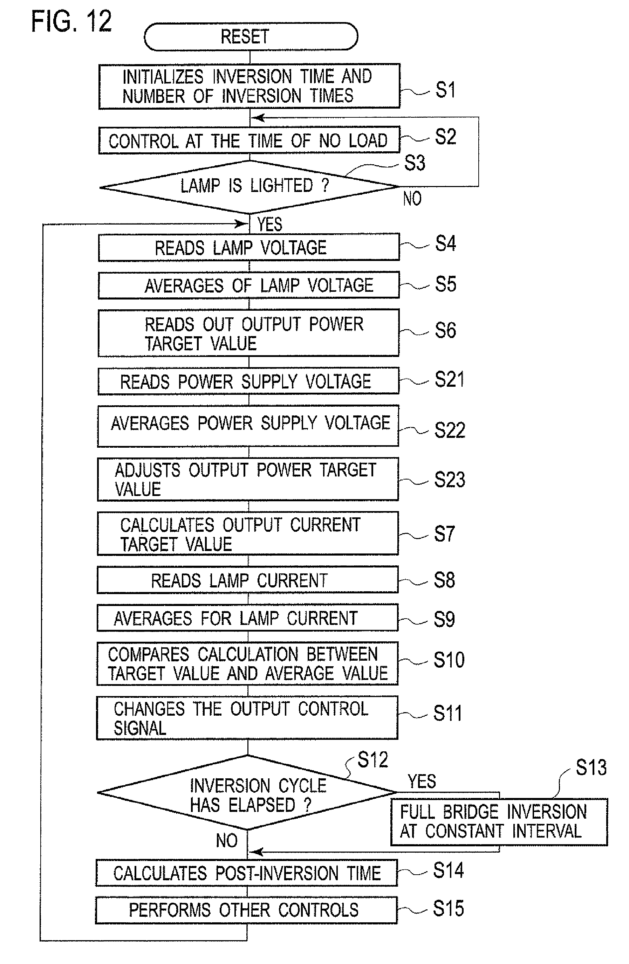

FIG. 12 shows a flowchart when the control unit 6 of this embodiment is realized by a microcomputer. Points where the flowchart of this embodiment is different from those of Embodiments 1 and 2 are as follows. After reading out the output power target value Pt in Step S6, the power supply voltage detection value Vs is read in Step S21. In Step S22, the power supply voltage detection value Vs is averaged. In Step S23, based on a value obtained by averaging the power supply voltage detection value Vs, the output power target value Pt is adjusted to an output power target value Pt'. These are the different points. Thereafter, control is performed to supply the output power target value Pt' thus adjusted to the discharge lamp 5. Note that the same reference numerals are assigned to the same portions as those in Embodiment 1, whereby a description thereof in this embodiment is omitted.

An example of a method for adjusting the output power target value Pt according to this embodiment is described.

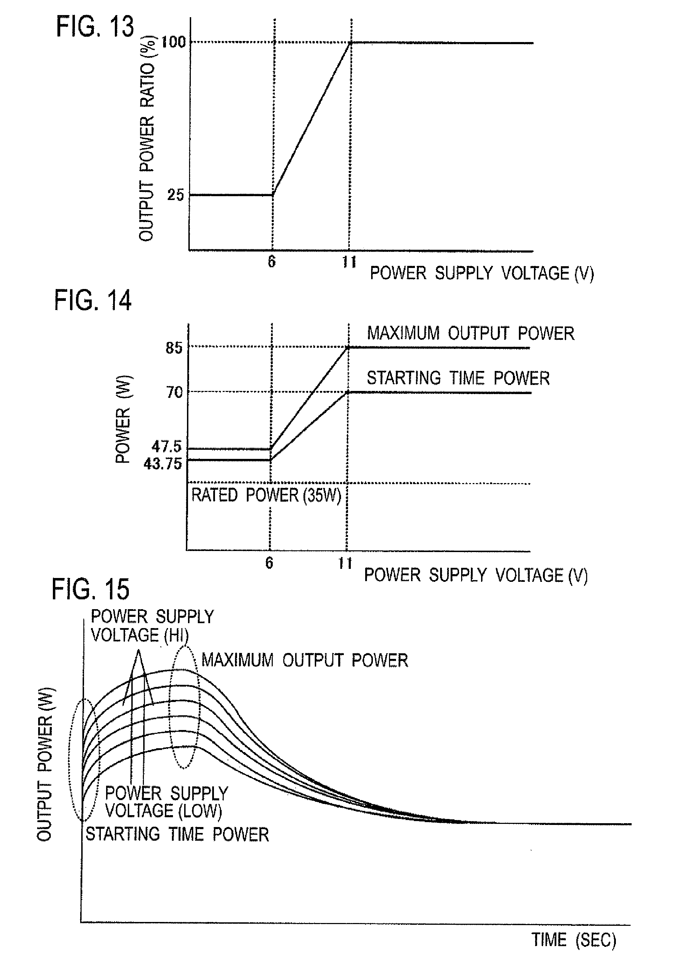

First, a table that determines to which percent "an output power amount that exceeds the rated power value" is reduced is stored in a ROM of the microcomputer in advance. As shown in FIG. 13, this determines an output power ratio at which "the output power amount that exceeds the rated power value" is reduced with respect to the power supply voltage detection value Vs. "The output power amount that exceeds the rated power value" is as follows in this embodiment.

In the case of the maximum power value: maximum power 85 W at rated voltage (12V) - rated power 35 W = 50 W
In the case of the starting time power: starting time power 70 W at rated voltage (12V) - rated power 35 W = 35 W

Based on the averaged power supply voltage detection value Vs and the table shown in FIG. 13, the output power ratio (%) at which the output power amount is reduced is read out. As an example, when it is assumed that the averaged power supply voltage value is 6V, the output power ratio becomes 25%. A result obtained by subtracting the rated power value from the output power target value and the above-described output power ratio are multiplied together.

In the case of the maximum power value: 50 W x 0.25 = 12.5 W
In the case of the starting time power: 35 W x 0.25 = 8.75 W
The rated power value is added to results of the multiplication.

In the case of the maximum power value: 12.5 W + 35 W = 47.5 W
In the case of the starting time power: 8.75 W + 35 W = 43.75 W
These results are used as the adjusted output power target value Pt' for the subsequent calculations.

In such a way, the maximum output power and the starting time power with respect to the power supply voltage detection value Vs become as shown in FIG. 14. In accordance with FIG. 14, the discharge lamp lighting device becomes capable of individually reducing the maximum output power and the starting time power at predetermined ratios while keeping a relational expression of: maximum output power > output power at starting time ≥ rated power.

Moreover, the starting time power and the maximum power in curves showing temporal changes of the output power by the above-described control are changed as shown in FIG. 15 in response to a magnitude of the power supply voltage detection value Vs, for example, when the output power curve in FIG. 2 is taken as an example.

When the power supply voltage detection value Vs is lowered, there are apprehensions that efficiency of the discharge lamp lighting device may be deteriorated, that a loss may be increased as a larger output is attempted to be outputted, and that the discharge lamp lighting device may be broken. In accordance with this embodiment, it is possible to realize the effects of Embodiment 1 at the time when the discharge lamp 5 is lighted at the rated power supply voltage. In addition, at the time of a low power supply voltage, when a large stress is applied, the maximum output power and the starting time power are reduced. In such a way, the stress is reduced, thus making it possible to prevent the breakage of the discharge lamp lighting device.

In this embodiment, the output power ratio is linearly reduced in response to the power supply voltage detection value Vs. However, it is needless to say that similar effects can be obtained even if the output power ratio is reduced in a manner of the polynomial function or reduced step by step.

(Embodiment 4)

FIG. 16 shows a circuit configuration of this embodiment. Points where the circuit configuration of this embodiment is different from that of Embodiment 3 are that the control unit has a function to detect a temperature T in place of the function to detect the power supply voltage detection value Vs (temperature measurement unit 65), and that a power target adjustment unit 64 that adjusts the output power target value Pt in response to the detected temperature T is provided between the power target storage unit 62 and the current target calculation unit 61.

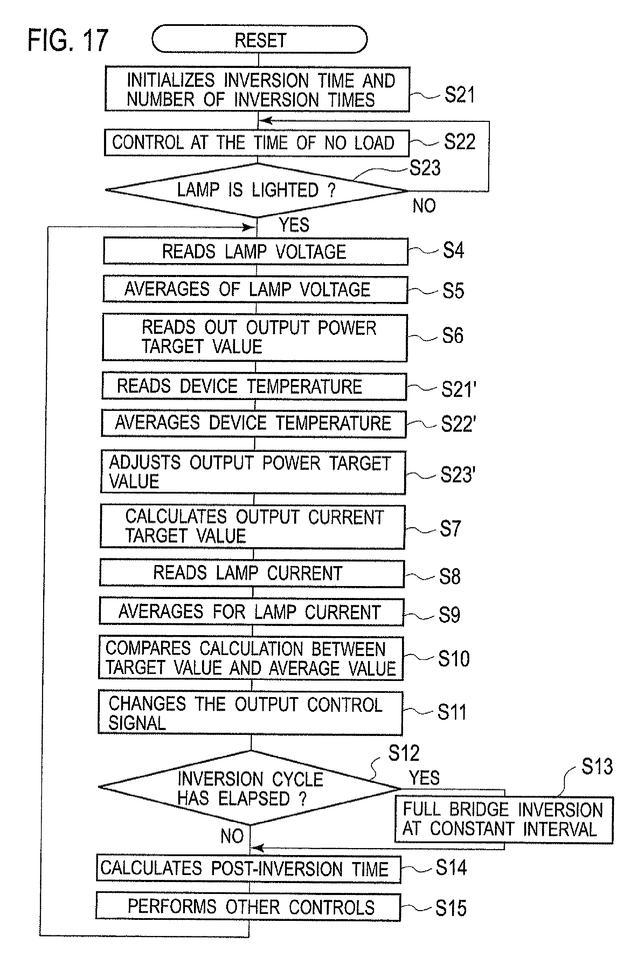

FIG. 17 shows a flowchart when a control unit 6 of this embodiment is realized by the microcomputer. Points where the flowchart of this embodiment is different from that of Embodiment 3 are that Step S21 of reading and averaging the power supply voltage detection value Vs becomes Step S21' of reading and averaging the temperature T of the discharge lamp lighting device, and that Step S23 of adjusting the output power target value Pt based on the value of the averaged power supply voltage detection value Vs becomes Step S23' of adjusting the output power target value Pt based on a value of the averaged temperature T. Note that the same reference numerals are assigned to the same portions as those of Embodiment 3, whereby a description thereof in this embodiment is omitted.

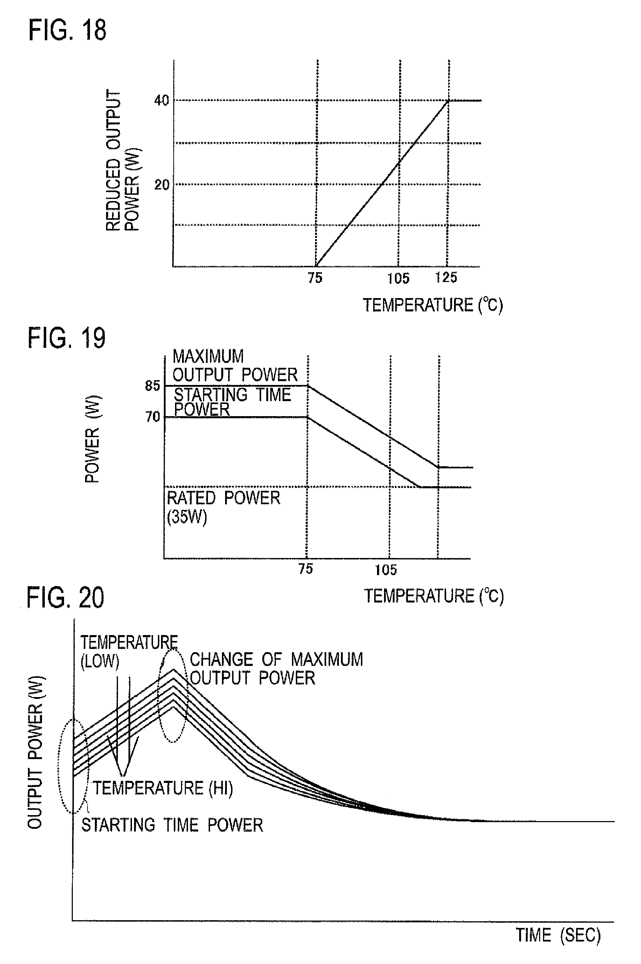

An example of a method for adjusting the output power target value Pt according to this embodiment is described. A table that determines a power amount to be reduced from the output power target value Pt in response to the temperature T of the discharge lamp 5 is stored in the ROM of the microcomputer. FIG. 18 is a graph in which a value of the output power to be reduced (axis of ordinates) is determined with respect to a change of the temperature T (axis of abscissas).

In the adjustment of the output power target value Pt in Step S23', the power amount to be reduced is read out, is subtracted from the output power target value Pt read out in Step S6, whereby the adjusted output power target value Pt' is obtained. However, in the case where a result of this subtraction becomes the rated power or less, the rated power is defined as the output power target value Pt'.

In such a way, the maximum output power and the starting time power with respect to the averaged temperature T become as shown in FIG. 19. The discharge lamp lighting device becomes capable of individually reducing the maximum output power and the starting time power while keeping the relationship of: maximum output power > output power at starting time ≥ rated power.

Moreover, the starting time power and the maximum output power in curves showing temporal changes of the output power by the above-described control are changed as shown in FIG. 20 in response to a degree of the temperature T when the power curve in FIG. 6 is taken as an example.

Note that it is recommended to use a thermistor and the like for a method for measuring the temperature T, and to set a measurement position in the vicinities of heat generation components (the switching element Q1, the transformer T1 and the diode D1 in FIG. 16) in the discharge lamp lighting device.

When the temperature T rises, there are apprehensions that the efficiency of the discharge lamp lighting device may be deteriorated, that the power loss may be increased as a larger output is attempted to be outputted, and that the discharge lamp lighting device may be broken. In accordance with this embodiment, it is possible to realize the effects of Embodiment 1 at the time when the discharge lamp 5 is lighted in a normal range of the temperature T. In addition, at the time when the ambient temperature is high, the maximum output power and the starting time power are reduced. In such a way, the stress is reduced, thus making it possible to prevent the breakage of the discharge lamp lighting device.

In this embodiment, the output power value is linearly reduced in response to the temperature of the discharge lamp 5. However, it is needless to say that similar effects can be obtained even if the output power value is reduced in a manner of the polynomial function or reduced step by step.

(Embodiment 5)

FIG. 21 shows a circuit configuration of this embodiment. Note that the same reference numerals are assigned to the same portions as those of the circuit configurations (in FIG. 29 in the conventional example) of Embodiments 1 and 2, whereby a description thereof in this embodiment is omitted.

A point where the circuit configuration of this embodiment is different from the circuit configuration of the conventional example is that a reference lamp voltage storage unit 67 and a voltage error calculation unit 66 are provided. Another different point is that the discharge lamp lighting device provides the power target adjustment unit 64 between the power target storage unit 62 and the current target calculation unit 61.

The reference lamp voltage storage unit 67 stores in advance a reference lamp voltage value Vb of the discharge lamp 5, which is a reference, when the discharge lamp 5 is lighted in accordance with the power curve stored in the power target storage unit 62. The voltage error calculation unit 66 compares the output voltage detection value Vo detected at an interval of a predetermined time (can also be detected for each change of a predetermined discharge lamp voltage value) and the value stored in the reference lamp voltage storage unit 67 with each other, and outputs an output power target correction value C to the power target adjustment unit 64. This discharge lamp lighting device corrects the output power target value Pt, which is outputted by the power target storage unit 62 and serves as an input to the power target calculation unit 61, by the output power target correction value C.

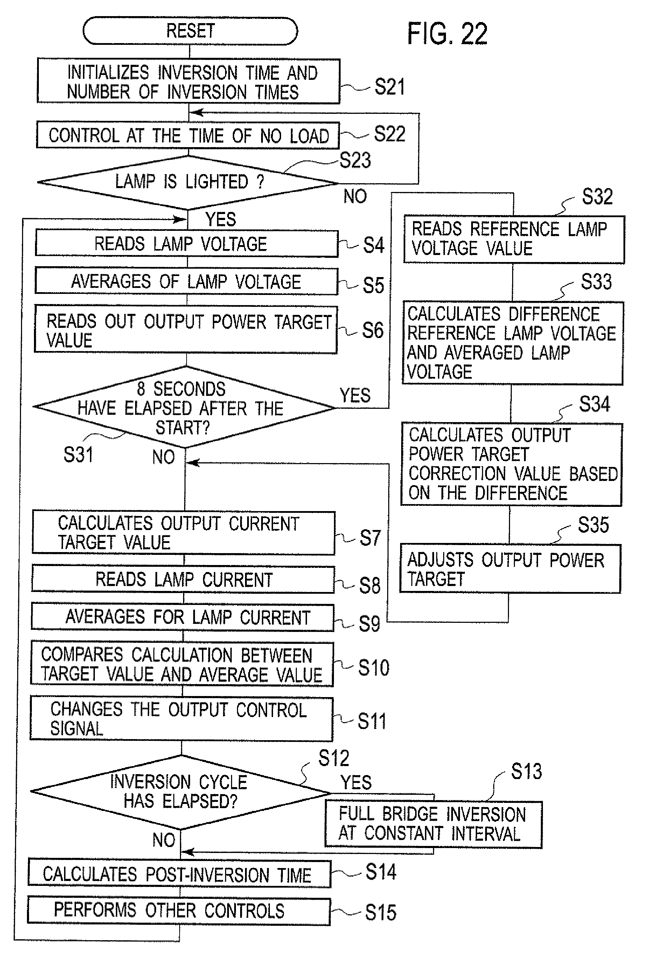

FIG. 22 shows a flow when a control unit 6 of this embodiment is realized by the microcomputer. A point where this flowchart is different from that of the conventional example is that the following flow steps are added after reading out the output power target value Pt.

In Step S31, by the control unit 6, the elapsed time after the discharge lamp 5 is started is measured, and it is determined whether or not eight seconds have elapsed after the start. Note that, in Step S31, it is determined whether or not eight seconds have elapsed because the luminous flux rises rapidly on and after the elapse of approximately ten seconds after the start. However, the output power target value Pt is set during a period from the time when the rise of the output power is completed (when six seconds have elapsed after the start) to the elapse of approximately ten seconds after the start of the discharge lamp 5. In such a way, effects of this embodiment can be achieved. Only in the case where eight seconds or more have elapsed after the start of the discharge lamp 5, the following flow of Steps S32 to S35 is implemented.

In Step S32, the reference lamp voltage value Vb is read out from the reference lamp voltage storage unit 67 of the ROM, which stores the change of the voltage of the above-described reference discharge lamp 5 when the discharge lamp 5 is started.

In Step S33, the reference lamp voltage Vb read out from the reference lamp voltage storage unit 67 and the output voltage detection value Vo averaged by the A/D conversion at the time of being read are compared with each other. In such a way, $\delta$Vla is obtained by the following expression.

$$\delta Vla = (\text{reference discharge lamp voltage value}) - (\text{averaged discharge lamp voltage value})$$

In Step S64, the output power target correction value C for correcting the output power target value Pt is calculated based on the above-described $\delta$Vla. Specifically, the voltage error calculation unit 66 stores a table, in which the above-described $\delta$Vla and the output power target correction value C are associated with each other, in the ROM in advance, and reads out the output power target correction value C therefrom.

In Step S65, by the power target adjustment unit 64, the output power target value Pt read out from the power target storage unit 62 and the output power target correction value C are added together, and a result obtained by such correction is used as the adjusted output power target value Pt' for the subsequent calculations.

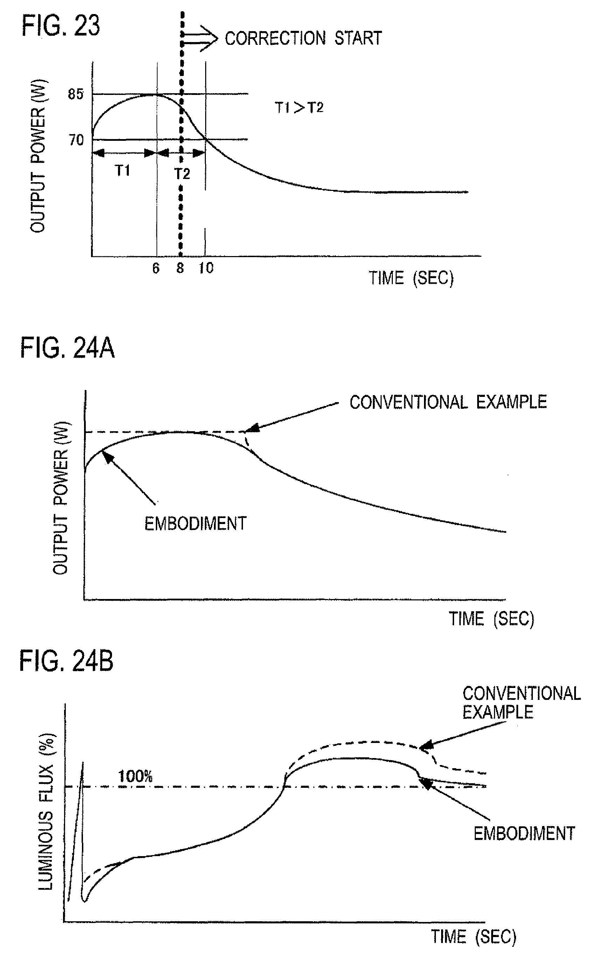

FIG. 23 shows a change of the output power target value Pt with respect to the time after the start of the discharge lamp 5 at the time of performing the control of this embodiment.

In a similar way to Conventional example 1, the output power target value is raised in a manner of the quadratic function until the elapse of six seconds (may be any from two to ten seconds though described so in Embodiment 1) after the start, and thereafter, the reduction of the output power is started.

In accordance with this embodiment, timing to start the correction of the output power target value Pt by the output voltage detection value Vo and the reference lamp voltage value Vb can be set after the rise of the output voltage is ended. The correction of the output power target value is control necessary for a phenomenon that the luminous flux rises rapidly owing to the characteristics intrinsic to the lamp, and it is one of objects of the increase of the output power to prevent the luminous flux from being decreased. Specifically, it is not necessary to correct the target output power value during the increase of the output power target value Pt. Such correction during the increase of the output power target value Pt causes flickering and the like of the discharge lamp 5. Accordingly, this described problem is avoided by this embodiment.

Moreover, the output power target value Pt is temporarily changed like power curves in this embodiment, which are shown in FIG. 23 and FIG. 24A. In such a way, though being described by using FIG. 4 in Embodiment 1, in accordance with the discharge lamp lighting device, it becomes possible to reduce the overshoot of the luminous flux while ensuring the necessary light quantity in comparison with the case where the constant maximum output power is supplied to the discharge lamp 5. This effect is shown in FIG. 24B.

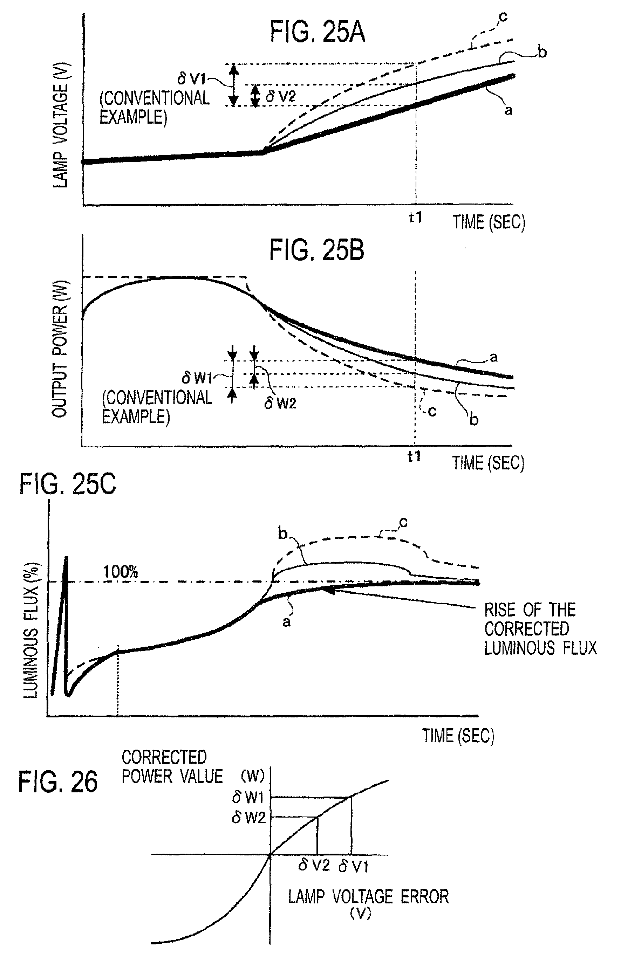

FIG. 25A shows a state of the change of the output voltage detection value Vo (lamp voltage) at this time. The lamp voltage is changed in synchronization with the luminous flux. As shown in FIG. 25A, the output power is changed by using the power curve of this embodiment. In such a way, the rise of the lamp voltage slows down as in a characteristic b in comparison with the change of the lamp voltage as in a characteristic c in the case of using the conventional power curve.

In this embodiment, the output power curve is corrected at a constant time interval based on the output power target correction value C corresponding to a magnitude of a difference (lamp voltage error) between the reference lamp voltage value Vb as in a characteristic a of FIG. 25A and the actual lamp voltage. Therefore, the corrected output power is changed as in FIG. 25B. The still uncorrected output power curve (characteristic a) is similar between the conventional example and this embodiment. However, with regard to the power change (characteristic b) after the correction, the difference in the lamp voltage is smaller in this embodiment, and accordingly, the corrected power value becomes smaller. Such a power change after the correction takes a value approximate to that of the still uncorrected power curve.

As an example, power correction at a time t1 is considered. As shown in FIG. 25A, a voltage error in the case of the conventional power curve is $\delta V1$. Meanwhile, a voltage error in the case of the power curve of this embodiment is $\delta V2$. Based on this result and a table that is shown in FIG. 26 and determines a one-to-one relationship between the lamp voltage error and the corrected power value, the corrected power value is decided. By using the table in FIG. 26, the corrected power value corresponding to the error $\delta V$ of the lamp voltage is determined. In such a way, it is made possible to freely correct the output power in response to the lamp voltage without depending on the change of the still uncorrected power curve. As shown in FIG. 25B, a corrected power value of the conventional example becomes $\delta W1$ as a difference between the still uncorrected power curve (characteristic a) and the corrected output power (characteristic c). Meanwhile, the corrected power value of this embodiment becomes $\delta W2$ as a difference between the still uncorrected power curve (characteristic a) and the corrected output power (characteristic b). This corrected power value is reduced more than the still uncorrected power curve (characteristic a), whereby the actual output power is determined.

As a result of this power correction, the rise of the luminous flux, which is shown in FIG. 24B, becomes a rise of the corrected luminous flux (characteristic a), which is shown in FIG. 25C, in both of the case of the power curve of the conventional example and the case of the power curve of this embodiment.

The correction of the output power target value in this embodiment is to correct the variations of the rise of the luminous flux, such as the above-described overshoot. However, the larger the correction amount becomes, the larger an amount of change of the corrected power change per time becomes. Therefore, it becomes difficult to stably control the rise of the luminous flux. Based on the matter described above, the output power curve is changed as shown in FIG. 23, whereby the overshoot is reduced in advance. In such a way, it becomes possible to reduce the above-described correction amount of the output power target value, and it becomes possible to stably raise the luminous flux.

In this embodiment, the control unit 6 obtains the corrected power value by using the difference between the reference lamp voltage value Vb and the actual output voltage detection value Vo (lamp voltage). However, the control unit 6 may obtain the corrected power value by using a difference between a gradient of the reference lamp voltage value Vb and a gradient of the actual lamp voltage. Moreover, the control unit 6 may obtain the corrected power value by using a value obtained by summing up a plurality of the differences between the reference lamp voltage value Vb and the actual output voltage detection value Vo (lamp voltage).

(Embodiment 6)

FIG. 27 shows a configuration of a headlight fixture that mounts thereon the discharge lamp lighting device of the present invention. As shown in FIG. 27, reference numeral la denotes a battery for a vehicle, reference numeral 101 denotes a lighting switch, reference numeral 102 denotes a fuse, reference numeral 5 denotes the high-intensity discharge lamp, reference numeral 8 denotes the discharge lamp lighting device, reference numeral 81 denotes a lamp socket, and reference numeral 9 denotes the headlight fixture. The igniter unit 4 may be incorporated in the lamp socket 81.

FIG. 28 is a perspective view of a vehicle that mounts thereon the headlight fixture of the present invention. FIG. 28 shows an example of using the above-mentioned headlight fixture 9 as a headlamp 201 of the vehicle 200. By this embodiment, it becomes possible to realize a headlight capable of raising the luminous flux without the feeling of wrongness and a vehicle that prevents a driver from feeling the wrongness and enhances safety.

INDUSTRIAL APPLICABILITY

In accordance with the present invention, the output power at the starting time of the discharge lamp is set at the value, which is smaller than the maximum output power value and larger than the rated power, and the output power is raised from the value thus set to the maximum output power value. In such a way, in accordance with the present invention, the time period while the maximum output power is being outputted is shortened, thus making it possible to realize the scale and cost reductions of the discharge lamp lighting device.

**Claims**

1. A discharge lamp lighting device comprising:

   a lighting circuit unit that receives a direct current voltage, and converts the direct current voltage into an output required by a discharge lamp;
   a discharge lamp voltage detection unit that detects a discharge lamp voltage;
   a discharge lamp current detection unit that detects a discharge lamp current; and
   a control unit that receives values of the detected discharge lamp voltage and discharge lamp current, and controls the lighting circuit unit to achieve a predetermined target power value,
   wherein, after the discharge lamp is started, the control unit controls the predetermined target power value to be reduced from an output power value larger than a rated power value to the rated power value for several seconds to several ten seconds, and
   the control unit sets a target power value after the discharge lamp is started at a first output power value larger than the rated power value, and increases the target power value toward a second output power value as a maximum output power value for a first predetermined time after the discharge lamp is started.

2. The discharge lamp lighting device according to claim 1, wherein the first output power value is 1.5 times or more the rated power value, the second output power value is twice or more the rated power value, and a relationship of: (second output power value - first output power value) $\geq$ 10 W is established.

3. The discharge lamp lighting device according to either one of claims 1 and 2, wherein the first predetermined time is two seconds or more and ten seconds or less.

4. The discharge lamp lighting device according to any one of claims 1 to 3, wherein a second predetermined time from reduction of the output from the second output power value to passage of the output through the first output power value is shorter than the first predetermined time.

5. The discharge lamp lighting device according to any one of claims 1 to 4, wherein the control unit increases the output by using a polynomial function such as a quadratic function until the first predetermined time.

6. The discharge lamp lighting device according to any one of claims 1 to 5, wherein the control unit reduces the output by using a polynomial function such as a quadratic function until a third predetermined time after the first predetermined time.

**7.** The discharge lamp lighting device according to any one of claims 1 to 6,
wherein, in response to a decrease of the direct current voltage, the control unit reduces both of the second output power value and an output power value at a starting time of the discharge lamp so that a following relationship can be established:

second output power value > output power value at starting time of discharge lamp ≥ rated power value

**8.** The discharge lamp lighting device according to any one of claims 1 to 6,
wherein, in response to that a temperature of the lighting device rises, the control unit reduces both of the second output power value and an output power value at a starting time of the discharge lamp so that a following relationship can be established:

second output power value > output power value at starting time of discharge lamp ≥ rated power value

**9.** The discharge lamp lighting device according to any one of claims 1 to 8,
wherein the control unit includes: a reference discharge lamp voltage storage unit that stores a target voltage value of a reference discharge lamp in association with an elapsed time after the discharge lamp is started; and a power target value control unit that, in response to a difference between an average value of voltages detected by the voltage detection unit plural times at a constant interval and the target voltage value read out from the reference discharge lamp voltage storage unit, sets an absolute value of a power correction value larger as an absolute value of the difference is larger, and corrects the target power value to a corrected target power value by using the power correction value, and
on and after a fourth predetermined time after the discharge lamp is started, controls the target power value to be the corrected target power value, and establishes a relationship of: first predetermined time < fourth predetermined time.

**10.** A vehicle-mounted high-intensity discharge lamp lighting device,
wherein the vehicle-mounted high-intensity discharge lamp lighting device is the discharge lamp lighting device according to any one of claims 1 to 9, and the discharge lamp does not substantially envelope mercury therein.

**11.** A vehicle-mounted headlight, wherein the vehicle-mounted headlight mounts thereon the discharge lamp lighting device according to any one of claims 1 to 10.

**12.** A vehicle, wherein the vehicle mounts thereon the vehicle-mounted headlight according to claim 11.

## FIG. 1

```
                    ┌─────────────────┐
                    │     RESET       │
                    └────────┬────────┘
              ┌──────────────┴──────────────┐
              │  INITIALIZES INVERSION      │
              │  TIME AND NUMBER OF         │── S1
              │  INVERSION TIMES            │
              └──────────────┬──────────────┘
              ┌──────────────┴──────────────┐
              │  CONTROL AT THE TIME OF     │── S2
              │  NO LOAD                    │
              └──────────────┬──────────────┘
                            S3
                      ╱──────┴──────╲
                     ╱  LAMP IS      ╲    NO
                     ╲  LIGHTED ?    ╱────────
                      ╲──────┬──────╱
                         YES
              ┌──────────────┴──────────────┐
              │    READS LAMP VOLTAGE       │── S4
              └──────────────┬──────────────┘
              ┌──────────────┴──────────────┐
              │  AVERAGES OF LAMP VOLTAGE   │── S5
              └──────────────┬──────────────┘
              ┌──────────────┴──────────────┐
              │  READS OUT OUTPUT POWER     │── S6
              │  TARGET VALUE               │
              └──────────────┬──────────────┘
              ┌──────────────┴──────────────┐
              │  CALCULATES OUTPUT          │── S7
              │  CURRENT TARGET VALUE       │
              └──────────────┬──────────────┘
              ┌──────────────┴──────────────┐
              │    READS LAMP CURRENT       │── S8
              └──────────────┬──────────────┘
              ┌──────────────┴──────────────┐
              │  AVERAGES FOR LAMP CURRENT  │── S9
              └──────────────┬──────────────┘
              ┌──────────────┴──────────────┐
              │  COMPARES CALCULATION       │
              │  BETWEEN TARGET VALUE       │── S10
              │  AND AVERAGE VALUE          │
              └──────────────┬──────────────┘
              ┌──────────────┴──────────────┐
              │  CHANGES THE OUTPUT         │── S11
              │  CONTROL SIGNAL             │
              └──────────────┬──────────────┘
                         S12
                    ╱──────┴──────╲                      S13
                   ╱  INVERSION    ╲   YES   ┌─────────────────────────┐
                   ╲  CYCLE HAS    ╱─────────│ FULL BRIDGE INVERSION AT│
                   ╲  ELAPSED ?   ╱          │ CONSTANT INTERVAL       │
                    ╲──────┬──────╱          └─────────────────────────┘
                        NO
              ┌──────────────┴──────────────┐
              │  CALCULATES                 │── S14
              │  POST-INVERSION TIME        │
              └──────────────┬──────────────┘
              ┌──────────────┴──────────────┐
              │  PERFORMS OTHER CONTROLS    │── S15
              └─────────────────────────────┘
```

# FIG. 2

(FIRST OUTPUT POWER VALUE)
STARTING TIME POWER

MAXIMUM OUTPUT POWER
(SECOND OUTPUT POWER VALUE)

OUTPUT POWER (W)

85

70

T1 > T2

T1    T2

6    10

TIME (SEC)

# FIG. 3A

OUTPUT POWER (W) (CONVENTIONAL EXAMPLE)

85

4

TIME (SEC)

# FIG. 3B

LUMINOUS FLUX (%) (CONVENTIONAL EXAMPLE)

c

a

b

4

TIME (SEC)

# FIG. 3C

# FIG. 3D

## FIG. 4

EP 2 282 617 A1

# FIG. 5

EP 2 282 617 A1

## FIG. 6

## FIG. 7

## FIG. 8

# FIG. 9

# FIG. 10

FIG. 11

FIG. 12

```
                    ┌──────────────────────┐
                    │        RESET         │
                    └──────────────────────┘
                    ┌──────────────────────┐
                    │ INITIALIZES INVERSION│
                    │ TIME AND NUMBER OF   │~ S1
                    │ INVERSION TIMES      │
                    └──────────────────────┘
                    ┌──────────────────────┐
                    │ CONTROL AT THE TIME  │~ S2
                    │ OF NO LOAD           │
                    └──────────────────────┘
                                           S3
                         LAMP IS LIGHTED ?      NO
                              │ YES
                    ┌──────────────────────┐
                    │  READS LAMP VOLTAGE  │~ S4
                    └──────────────────────┘
                    ┌──────────────────────┐
                    │ AVERAGES OF LAMP     │~ S5
                    │ VOLTAGE              │
                    └──────────────────────┘
                    ┌──────────────────────┐
                    │ READS OUT OUTPUT     │~ S6
                    │ POWER TARGET VALUE   │
                    └──────────────────────┘
                    ┌──────────────────────┐
                    │ READS POWER SUPPLY   │~ S21
                    │ VOLTAGE              │
                    └──────────────────────┘
                    ┌──────────────────────┐
                    │ AVERAGES POWER       │~ S22
                    │ SUPPLY VOLTAGE       │
                    └──────────────────────┘
                    ┌──────────────────────┐
                    │ ADJUSTS OUTPUT POWER │~ S23
                    │ TARGET VALUE         │
                    └──────────────────────┘
                    ┌──────────────────────┐
                    │ CALCULATES OUTPUT    │~ S7
                    │ CURRENT TARGET VALUE │
                    └──────────────────────┘
                    ┌──────────────────────┐
                    │ READS LAMP CURRENT   │~ S8
                    └──────────────────────┘
                    ┌──────────────────────┐
                    │ AVERAGES FOR LAMP    │~ S9
                    │ CURRENT              │
                    └──────────────────────┘
                    ┌──────────────────────┐
                    │ COMPARES CALCULATION │~ S10
                    │ BETWEEN TARGET VALUE │
                    │ AND AVERAGE VALUE    │
                    └──────────────────────┘
                    ┌──────────────────────┐
                    │ CHANGES THE OUTPUT   │~ S11
                    │ CONTROL SIGNAL       │
                    └──────────────────────┘
                           S12                    S13
                     INVERSION CYCLE    YES  ┌──────────────┐
                     HAS ELAPSED ?           │ FULL BRIDGE  │
                          │ NO               │ INVERSION AT │
                          │                  │ CONSTANT     │
                          │                  │ INTERVAL     │
                          │                  └──────────────┘
                    ┌──────────────────────┐
                    │ CALCULATES POST-     │~ S14
                    │ INVERSION TIME       │
                    └──────────────────────┘
                    ┌──────────────────────┐
                    │ PERFORMS OTHER       │~ S15
                    │ CONTROLS             │
                    └──────────────────────┘
```

FIG. 13

FIG. 14

FIG. 15

**FIG. 16**

EP 2 282 617 A1

FIG. 17

```
                    ┌─────────────────────┐
                    │        RESET        │
                    └─────────────────────┘
```

INITIALIZES INVERSION TIME AND NUMBER OF INVERSION TIMES ── S21

CONTROL AT THE TIME OF NO LOAD ── S22

S23

LAMP IS LIGHTED ?   NO

YES

READS LAMP VOLTAGE ── S4

AVERAGES OF LAMP VOLTAGE ── S5

READS OUT OUTPUT POWER TARGET VALUE ── S6

READS DEVICE TEMPERATURE ── S21'

AVERAGES DEVICE TEMPERATURE ── S22'

ADJUSTS OUTPUT POWER TARGET VALUE ── S23'

CALCULATES OUTPUT CURRENT TARGET VALUE ── S7

READS LAMP CURRENT ── S8

AVERAGES FOR LAMP CURRENT ── S9

COMPARES CALCULATION BETWEEN TARGET VALUE AND AVERAGE VALUE ── S10

CHANGES THE OUTPUT CONTROL SIGNAL ── S11

S12

INVERSION CYCLE HAS ELAPSED ?   YES   S13

FULL BRIDGE INVERSION AT CONSTANT INTERVAL

NO

CALCULATES POST-INVERSION TIME ── S14

PERFORMS OTHER CONTROLS ── S15

FIG. 18

FIG. 19

FIG. 20

EP 2 282 617 A1

FIG. 21

FIG. 22

```
                    ┌──────────────────┐
                    │      RESET        │
                    └────────┬─────────┘
                             │
             ┌───────────────────────────────┐
             │ INITIALIZES INVERSION TIME AND │──── S21
             │ NUMBER OF INVERSION TIMES      │
             └───────────────┬───────────────┘
                             │
             ┌───────────────────────────────┐
             │ CONTROL AT THE TIME OF NO LOAD │──── S22
             └───────────────┬───────────────┘
                             │                           S23
                    ◇────────────────────◇
                    │  LAMP IS LIGHTED ?  │
                    ◇────────────────────◇ NO
                             │ YES
```

READS REFERENCE LAMP VOLTAGE VALUE — S32

CALCULATES DIFFERENCE REFERENCE LAMP VOLTAGE AND AVERAGED LAMP VOLTAGE — S33

CALCULATES OUTPUT POWER TARGET CORRECTION VALUE BASED ON THE DIFFERENCE — S34

ADJUSTS OUTPUT POWER TARGET — S35

READS LAMP VOLTAGE — S4

AVERAGES OF LAMP VOLTAGE — S5

READS OUT OUTPUT POWER TARGET VALUE — S6

8 SECONDS HAVE ELAPSED AFTER THE START? — S31 / YES / NO

CALCULATES OUTPUT CURRENT TARGET VALUE — S7

READS LAMP CURRENT — S8

AVERAGES FOR LAMP CURRENT — S9

COMPARES CALCULATION BETWEEN TARGET VALUE AND AVERAGE VALUE — S10

CHANGES THE OUTPUT CONTROL SIGNAL — S11

INVERSION CYCLE HAS ELAPSED? — S12 / YES / NO

FULL BRIDGE INVERSION AT CONSTANT INTERVAL — S13

CALCULATES POST-INVERSION TIME — S14

PERFORMS OTHER CONTROLS — S15

## FIG. 23

CORRECTION START

T1 > T2

OUTPUT POWER (W)

85

70

T1   T2

6  8  10

TIME (SEC)

## FIG. 24A

CONVENTIONAL EXAMPLE

OUTPUT POWER (W)

EMBODIMENT

TIME (SEC)

## FIG. 24B

CONVENTIONAL EXAMPLE

LUMINOUS FLUX (%)

100%

EMBODIMENT

TIME (SEC)

FIG. 25A

LAMP VOLTAGE (V)

δ V1
(CONVENTIONAL
EXAMPLE)

δ V2

c

b

a

t1    TIME (SEC)

FIG. 25B

OUTPUT POWER (W)

δ W1
(CONVENTIONAL
EXAMPLE)

δ W2

a

c    b

t1    TIME (SEC)

FIG. 25C

LUMINOUS FLUX (%)

100%

b    c

a

RISE OF THE
CORRECTED
LUMINOUS FLUX

TIME (SEC)

FIG. 26

CORRECTED
POWER VALUE    (W)

δ W1

δ W2

δ V2  δ V1

LAMP VOLTAGE ERROR
(V)

FIG. 27

FIG. 28

# FIG. 29

# FIG. 30

## FIG. 31A

OUTPUT POWER TARGET VALUE (W)

TIME (SEC)

## FIG. 31B

LUMINOUS FLUX (%)

100

TIME (SEC)

# FIG. 32A

OUTPUT POWER TARGET VALUE (W)

TIME (SEC)

# FIG. 32B

LUMINOUS FLUX (%)

β

α

γ

TIME (SEC)

EP 2 282 617 A1

# FIG. 33A

# FIG. 33B

# FIG. 33C

MERCURY-CONTAINING
HIGH-INTENSITY DISCHARGE LAMP

40

# FIG. 33D

# FIG. 33E

# FIG. 33F

MERCURY-FREE HIGH-INTENSITY
DISCHARGE LAMP

## INTERNATIONAL SEARCH REPORT

| | |
|---|---|
| | International application No. |
| | PCT/JP2009/059361 |

**A. CLASSIFICATION OF SUBJECT MATTER**
*H05B41/24*(2006.01)i

According to International Patent Classification (IPC) or to both national classification and IPC

**B. FIELDS SEARCHED**

Minimum documentation searched (classification system followed by classification symbols)
H05B41/24

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-230094 A (Denso Corp.), 24 August, 2001 (24.08.01), Fig. 2 (Family: none) | 1-12 |
| X | CD-ROM of the specification and drawings annexed to the request of Japanese Utility Model Application No. 28491/1993(Laid-open No. 82799/1994) (Koito Manufacturing Co., Ltd.), 25 November, 1994 (25.11.94), Fig. 2 (Family: none) | 1-12 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 June, 2009 (25.06.09) | 07 July, 2009 (07.07.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

42

## INTERNATIONAL SEARCH REPORT

| International application No. |
| --- |
| PCT/JP2009/059361 |

**C (Continuation).   DOCUMENTS CONSIDERED TO BE RELEVANT**

| Category* | Citation of document, with indication, where appropriate, of the relevant passages | Relevant to claim No. |
| --- | --- | --- |
| X | JP 2004-55447 A  (Sumida Technologies Inc.),<br>19 February, 2004 (19.02.04),<br>Fig. 5<br>& US 2005/0258782 A1    & EP 1542513 A1<br>& WO 2004/010743 A1    & CA 2493285 A<br>& CN 1656859 A | 1-12 |
| A | JP 2004-207018 A  (Seiko Epson Corp.),<br>22 July, 2004 (22.07.04),<br>Fig. 12<br>& US 2004/0136134 A1    & CN 1510504 A | 1-12 |
| A | JP 10-32096 A  (Matsushita Electric Industrial<br>Co., Ltd.),<br>03 February, 1998 (03.02.98),<br>Fig. 7<br>(Family: none) | 1-12 |
| A | JP 2007-128777 A  (Matsushita Electric<br>Industrial Co., Ltd.),<br>24 May, 2007 (24.05.07),<br>Figs. 4, 12<br>& WO 2007/052770 A1    & CN 101300904 A | 1-12 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2946384 B
- JP 2000235899 A

- JP 2005019337 A